# EUROPÄISCHE PATENTANMELDUNG

(11) **EP 4 246 745 A1**
(43) Veröffentlichungstag der Anmeldung: **20.09.2023**
(21) Anmeldenummer: 22162306.9
(22) Anmeldetag: 15.03.2022
(51) Int. Cl.: H02G 3/18

(54) **LEITUNGSAUSLASS**

(71) Anmelder: Tehalit GmbH, 67716 Heltersberg (DE)
(72) Erfinder: LETTERMANN, Gert, 67688 RODENBACH (DE); PFEIFER, Christoph, 67707 SCHOPP (DE)
(74) Vertreter: Cabinet Nuss

(57) **Zusammenfassung**

Ein Leitungsauslass (100) für einen Unterflurkanal bzw. eine damit verbundene Unterflurkassette (10) oder Versorgungseinheit, umfasst einen Rahmen (102) und einen in dem Rahmen (102) beweglich gelagerten Deckel (130). Der Deckel (130) weist an zwei gegenüberliegenden Seiten (132a, 132b) Führungselemente (136, 138, 140) auf, welche in entsprechenden Konturen (106) einer Kulissenführung zweier gegenüberliegender Seiten (104a, 104b) des Rahmens (102) so geführt sind, dass eine im Wesentlichen parallel zur Oberfläche (134) des Deckels (130) verlaufende, durch zwei erste, sich an gegenüberliegenden Seiten des Deckels gegenüberliegende der Führungselemente (138) gebildete Schwenkachse (160) des Deckels (130) entlang der gegenüberliegenden Seiten (104a, 104b) des Rahmens (102) zwischen einer ersten, geschlossenen und einer zweiten, offenen Stellung des Deckels (130) verschiebbar ist.

## Beschreibung

Die Erfindung betrifft einen Leitungsauslass, insbesondere für einen Unterflurkanal und/oder Unterflurkassette.

### Hintergrund

Werden Steckdosen im Boden eingebaut, sind diese meist in einer Kassette oder Versorgungseinheit angeordnet, deren Zugangsöffnung in der Regel mit einem in einem Rahmen aufgenommenen Deckel abgedeckt ist. Der Deckel muss auch im genutzten Zustand, d.h., wenn eine oder mehrere Leitungen aus der Kassette oder Versorgungseinheit herausgeführt sind, weitestgehend geschlossen sein. Ein Leitungsauslass beschränkt die Öffnung zur Ausführung der Elektroleitung. Die Leitungen der angeschlossenen Elektrogeräte müssen durch den Leitungsauslass am Deckel zudem auch gegen Beschädigung durch Belastung des Deckels oder des Leitungsauslasses geschützt sein, ohne dass dadurch eine Stolpergefahr entsteht. Der Leitungsauslass muss also zwei Stellungen, geschlossen und offen, sicher halten können.

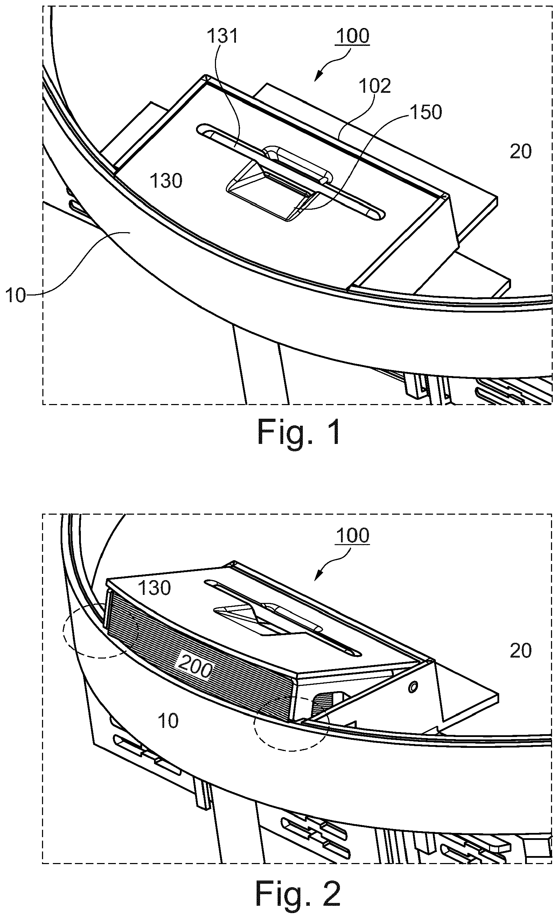

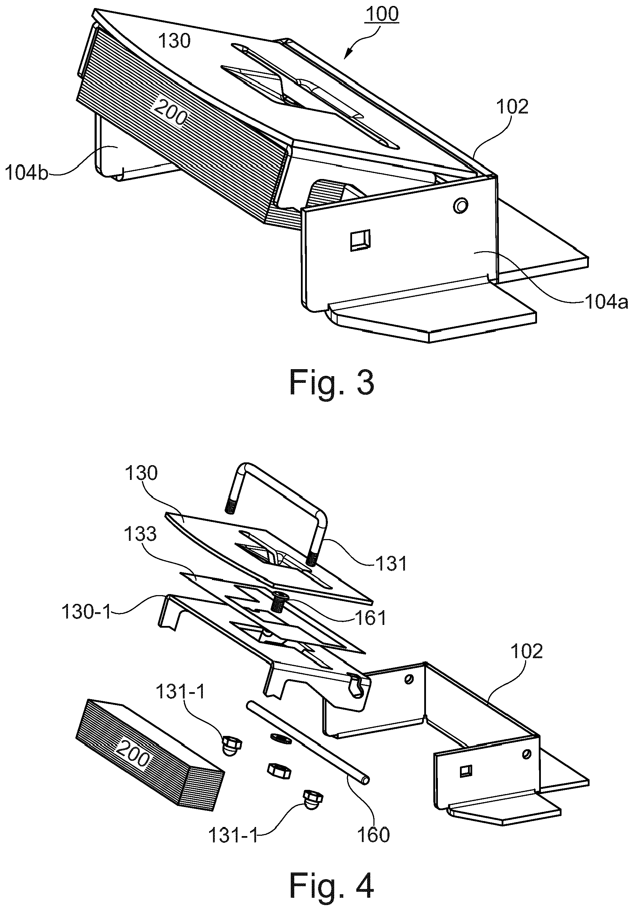

Bekannte Leitungsauslässe 100, wie beispielsweise der in den Figuren 1 bis 4 gezeigten Art, sind aus einer Vielzahl von Bauteilen zusammengesetzt und daher aufwendig und teuer in der Herstellung. Zudem ist der zum Anheben vorgesehene Griff 131 ästhetisch wenig ansprechend, und in der zum Ergreifen in den Griff 131 erforderlichen Vertiefung 150 kann sich leicht Schmutz sammeln, der nur schlecht zu entfernen ist. Wie in Figur 2 erkennbar ist, benötigt der bekannte Leitungsauslass 100 in der geöffneten Position zudem ein Gegenlager, auf dem der angehobene Leitungsauslass 100 aufliegt und sich abstützt, bspw. den Rahmen der Unterflurkassette 10, in der Figur durch die gestrichelten Ovale hervorgehoben. Dadurch kann es zu Beschädigungen des Kassettenrahmens kommen, die zwar nicht unbedingt die Funktion, aber in jedem Fall die Optik beeinträchtigen. Figur 3 zeigt eine Ansicht eines bekannten Leitungsauslasses 100 vor der Montage auf einem in der Figur nicht gezeigten Kassettendeckel 20 in einer geöffneten Stellung. Die Wände des Rahmens 102 sind aus einem gestanzten und gebogenen Blechteil geformt. In der Figur sind vor allem die Rahmenseiten 104a, 104b des Rahmens 102 sichtbar. Figur 4 zeigt den bekannten Leitungsauslass 100 in einer Explosionsdarstellung. Deutlich erkennbar ist, dass der Rahmen 102 aus einem gestanzten und gebogenen Blechteil hergestellt ist. Der Deckel 130 umfasst ein gestanztes und gebogenes Blechteil 130-1, in das eine Schwenkachse 160 eingesetzt ist und auf welches mittels einer Klebeschicht 133 eine Deckeloberseite 134 aufgeklebt ist. Eine Schraube 161 dient zur Befestigung eines Erdungskabels. Der Griff 131 wird in Bohrungen in dem Blechteil 130-1 des Deckels 130 und der Deckeloberseite 134 beweglich geführt, wobei Hutmuttern 131-1 einen Anschlag bilden. Ein Dichtelement 200, bspw. aus einem Schaumstoff oder durch eine Bürste gebildet, ist in dem Blechteil 130-1 montiert, bspw. geklebt.

Wie aus der vorstehenden Beschreibung erkennbar ist, werden die bekannten Leitungsauslässe in der Regel aus mehreren Blechzuschnitten oder -stanzteilen gefertigt, welche in der Regel eine oder mehrere Abkantungen aufweisen. Sofern die Blechzuschnitte nicht einteilig sind, werden sie durch Schweißen, Kleben oder Schrauben zusammengefügt und als Baugruppe am Kassettendeckel montiert, bspw. geschweißt oder geschraubt. Führungen, Anlagepunkte o.Ä. müssen durch Ausklinkungen, Stifte o.Ä. umgesetzt werden, wodurch sich neben der ohnehin hohen Zahl an Einzelteilen außerdem hohe Herstellungskosten ergeben. Beim Stanzen der Blechzuschnitte können scharfe Kanten entstehen, welche in zusätzlichen Arbeitsschritten bearbeitet werden müssen, damit die Verletzungsgefahr verringert wird. Da der Leitungsauslass in der Regel an den Kassettendeckel angeschweißt ist, ist ein Austausch bei Beschädigung nicht oder nur mit erheblichem Aufwand möglich. Üblicherweise wird der gesamte Deckel mitsamt dem darauf angebrachten Bodenbelag ausgetauscht, was bei der Wiederherstellung des Bodenbelags weiteren zusätzlichen Aufwand mit sich bringt.

### Zusammenfassung der Erfindung

Es ist eine Aufgabe der vorliegenden Erfindung einen Leitungsauslass vorzuschlagen, der einen oder mehrere der vorstehend genannten Nachteile existierender Leitungsauslässe behebt oder zumindest deren Auswirkungen reduziert.

Diese Aufgabe wird durch den in Anspruch 1 angegebenen Leitungsauslass gelöst. Vorteilhafte Ausgestaltungen und Weiterentwicklungen sind in den abhängigen Ansprüchen angegeben.

Ein Leitungsauslass für einen Unterflurkanal bzw. eine damit verbundene Unterflurkassette oder Versorgungseinheit umfasst einen Rahmen und einen in dem Rahmen beweglich gelagerten Deckel. Erfindungsgemäß weist der Deckel an zwei gegenüberliegenden Seiten Führungselemente auf, welche in entsprechenden Konturen einer Kulissenführung zweier gegenüberliegender Seiten des Rahmens geführt sind. Dabei bilden zwei erste, sich an gegenüberliegenden Seiten des Deckels gegenüberliegende der Führungselemente eine Schwenkachse, die im Wesentlichen parallel zur Oberfläche des Deckels verläuft. Die Führungselemente, die vorzugsweise fest mit den Seiten des Deckels verbunden oder integrale Teile davon sind, sind in den Konturen so geführt, dass die Schwenkachse entlang der gegenüberliegenden Seiten des Rahmens zwischen einer ersten, geschlossenen und einer zweiten, offenen Stellung des Deckels verschiebbar ist.

Im Folgenden wird, wenn auf Führungselemente oder Konturen der Kulissenführung Bezug genommen wird, aus Klarheitsgründen darauf verzichtet, die Spiegelsymmetrie der sich gegenüberliegenden Elemente zu beschreiben. Das heißt bspw., wenn von einem Abschnitt der Kontur der Kulissenführung die Rede ist, ist damit ein Abschnitt an einer Seite des Rahmens gemeint, für den auf der gegenüberliegenden Seite des Rahmens ein entsprechend gespiegelter Abschnitt vorhanden ist. Sofern Unterschiede zwischen sich an dem Deckel oder dem Rahmen gegenüberliegenden Seiten vorhanden sind, wird dies entweder explizit genannt, oder es ergibt sich eindeutig aus dem Kontext.

Bei einer oder mehreren Ausgestaltungen ist ein erster Abschnitt der Kontur der Kulissenführung so gestaltet, dass die Verschiebung der Schwenkachse aus der ersten, geschlossenen Stellung des Deckels heraus in die zweite, offene Stellung des Deckels zunächst eine im Wesentlichen senkrecht zu einer Oberkante des Rahmens verlaufende Komponente aufweist. Dadurch wird der Deckel, dessen Oberseite bspw. in der ersten, geschlossenen Stellung im Wesentlichen bündig mit einer Oberkante des Rahmens abschließt, beim Öffnen zunächst im Ganzen und im Wesentlichen parallel zu seiner ursprünglichen Lage bzw. Orientierung angehoben. Der erste Abschnitt der Kontur der Kulissenführung führt dabei vorzugsweise das erste Führungselement.

Bei einer oder mehreren Ausgestaltungen ist ein zweiter Abschnitt der Kontur der Kulissenführung so gestaltet, dass die Verschiebung der Schwenkachse aus der ersten, geschlossenen Stellung des Deckels heraus in die zweite, offene Stellung des Deckels eine parallel zu der Oberkante des Rahmens und eine senkrecht zu der Oberkante des Rahmens verlaufende Komponente aufweist. Dadurch wird der Deckel von einer parallel zu seiner Schwenkachse verlaufenden Seite des Rahmens fortbewegt, so dass eine Schwenkbewegung ermöglicht wird, ohne dass der Deckel weit über eine obere Kante der parallel zu seiner Schwenkachse verlaufenden Seite des Rahmens angehoben werden muss. Der zweite Abschnitt schließt sich vorzugsweise an den ersten Abschnitt an.

Bei einer oder mehreren Ausgestaltungen ist in einer ersten Zwischenposition des Deckels eine translatorische Bewegung der ersten Führungselemente in einer Richtung senkrecht zur Oberfläche des Deckels durch einen Anschlag in der Kontur der Kulissenführung begrenzt, so dass nur noch eine Drehbewegung um die von den beiden ersten Führungselementen gebildete Schwenkachse möglich ist.

Zur Unterstützung der Führung des Deckels können zweite Führungselemente vorgesehen sein, welche von den ersten Führungselementen beabstandet an den Seiten des Deckels angeordnet sind, und welche zumindest während eines Teils der Bewegung des Deckels von der ersten, geschlossenen Stellung in die zweite, offene Stellung in entsprechenden Abschnitten der Konturen der Kulissenführung geführt sind. Die Führung kann auch alleine darin bestehen, dass die zweiten Führungselemente an einem Anschlag anstoßen.

Bei einer oder mehreren Ausgestaltungen sind die zweiten Führungselemente in einer Kontur der Kulissenführung so geführt, dass eine Drehbewegung des Deckels um die Schwenkachse in der ersten Zwischenposition begrenzt ist. Hierzu kann bspw. ein Anschlag in der Kontur vorgesehen sein. Eine Verschiebung parallel zu der seitlichen Oberkante des Rahmens bleibt dabei weiterhin möglich.

Bei einer oder mehreren Ausgestaltungen sind an dem Deckel Abstützelemente mit einer Auflagefläche vorgesehen. Die Auflagefläche des Abstützelements ist in der ersten Zwischenposition des Deckels durch eine Verschiebung parallel zu einer seitlichen Oberkante des Rahmens auf eine Stützfläche des Rahmens aufschiebbar. Die Stützfläche kann auch durch den Rahmen selbst, bspw. dessen Oberkante, oder einen daran vorgesehenen Vorsprung gebildet sein. Bei auf den Rahmen aufgeschobener Auflagefläche wird der Deckel in der zweiten, offenen Stellung gehalten. Die Abstützelemente können zugleich dritte Führungselemente sein, welche in einer Kontur der Kulissenführung geführt sind und die Führung der translatorischen und/oder rotatorischen Bewegung des Deckels unterstützen. Die Auflagefläche jedes der Abstützelemente kann von einem Anschlag begrenzt sein, welcher ein weiteres Aufschieben der Auflagefläche auf den Rahmen oder den daran vorgesehenen Vorsprung verhindert, eine Schwenkbewegung des Deckels jedoch zulässt.

Bei einer oder mehreren Ausgestaltungen sind an den Seiten des Deckels erste Rastkonturen vorgesehen, welche in der zweiten, offenen Stellung des Deckels jeweils so zu einer entsprechend geformten zweiten Rastkontur des Rahmens positioniert sind, dass eine Verschiebung der Abstützelemente parallel zu einer seitlichen Oberkante des Rahmens und/oder der ersten Führungselemente des Deckels senkrecht zu der seitlichen Oberkante des Rahmens bei auf dem Rahmen aufliegender Auflagefläche der Abstützelemente verhindert ist. Die ersten und zweiten Rastkonturen können so gestaltet sein, dass sie durch eine Schwenkbewegung des Deckels in der zweiten, offenen Stellung voneinander lösbar sind. Die ersten Rastkonturen können dazu an den ersten Führungselementen angeordnet sein, welche die Schwenkachse des Deckels bilden. Bei voneinander gelösten ersten und zweiten Rastkonturen ist die Schwenkachse des Deckels in der Kontur der Kulissenführung verschiebbar.

Gemäß einem weiteren Aspekt der Erfindung weist der Deckel eine Vertiefung oder Aussparung auf, welche durch eine in der Vertiefung oder Aussparung schwenkbar gelagerte Abdeckung verschließbar ist. Die schwenkbar gelagerte Abdeckung kann in aufgeschwenkter Stellung als Griff genutzt werden, mit welchem der Deckel von der ersten, geschlossenen Stellung in die zweite, offene Stellung gebracht werden kann und umgekehrt. Die Schwenkachse verläuft vorzugsweise parallel zu der Deckeloberfläche. Eine Oberfläche der Abdeckung liegt im geschlossenen Zustand vorzugsweise im Wesentlichen in derselben Ebene wie die Oberfläche des Deckels.

Bei einer oder mehreren Ausgestaltungen ist die Schwenkachse der Abdeckung von deren parallel dazu verlaufenden Seiten entfernt angeordnet, so dass die Abdeckung durch eine seitlich der Schwenkachse senkrecht auf die Oberfläche der Abdeckung wirkende Kraft aufschwenkt und eine aus der Aussparung herausschwenkende Kante der Abdeckung damit als Griff greifbar ist. Alternativ dazu kann die Schwenkachse der Abdeckung an einer der parallel dazu verlaufenden Seiten der Abdeckung angeordnet sein, und die Abdeckung ist in die Vertiefung hineinschwenkbar. Die Vertiefung erstreckt sich dabei unter die an der der Schwenkachse gegenüberliegende Seite der Deckeloberfläche, so dass ein Hinterschnitt entsteht, welcher als Griff genutzt werden kann. Hierbei kann die Abdeckung bspw. durch eine Feder im unbelasteten Zustand in die geschlossene Stellung gebracht werden. Die Feder kann auch zugleich die Schwenkachse bereitstellen, wenn sie bspw. als Blattfeder ausgeführt ist.

Bei einer oder mehreren Ausgestaltungen wird durch das Aufschwenken der Abdeckung eine Verriegelungsvorrichtung betätigt, welche eine Bewegung des Deckels des Leitungsauslasses freigibt. Hierzu kann bspw. ein Riegel mit der Abdeckung verbunden sein, welcher bei geschlossener Abdeckung zumindest bei geschlossenem Deckel in den Rahmen eingreift und eine Bewegung verhindert.

Bei einer oder mehreren Ausgestaltungen sind der Deckel und/oder der Rahmen mittels eines Druck- oder Spritzgussverfahrens hergestellt.

Bei einer oder mehreren Ausgestaltungen weist die Deckeloberfläche, die Oberfläche der Abdeckung und/oder zumindest sichtbare Teile des Rahmens durch eine mechanische, chemische oder elektrochemische Behandlung eine von der nach der Herstellung vorliegende Oberfläche abweichende Optik auf. So können der Deckel, der Rahmen und/oder die Abdeckung bspw. aus einem Zink- oder Aluminium-Druckguss oder einem Kunststoffspritzguss gefertigt sein, welcher nach der Herstellung durch eine entsprechende Behandlung eine Edelstahl- oder Messingoptik bzw. durch eine aufgeklebte Folie ein anderes Design erhält.

Bei einer oder mehreren Ausgestaltungen sind außen an den Rahmenseiten und/oder der Rahmenrückwand Vorsprünge vorgesehen welche, wenn der Rahmen auf der Oberseite des Kassettendeckels positioniert ist, auf dieser Oberseite aufliegen und eine Bewegung des Rahmens in Richtung der Oberseite des Kassettendeckels blockieren. Die Vorsprünge können rippenartig ausgeführt sein und Kräfte auf den Kassettendeckel übertragen.

Bei einer oder mehreren Ausgestaltungen stehen von der Unterkante der Rahmenrückwand ein oder mehrere Laschen ab, welche auf einer in Richtung der Oberseite des Deckels zeigenden Oberseite eine oder mehrere erste Strukturen aufweisen die, wenn der Rahmen auf der Oberseite des Kassettendeckels in einer Endlage positioniert ist, in entsprechende, von der Unterseite des Kassettendeckels aus zugängliche zweite Strukturen eingreifen, und eine Bewegung des Rahmens parallel zu der Oberfläche des Kassettendeckels verhindern. Alternativ oder zusätzlich können in die ersten Strukturen, wenn der Rahmen auf der Oberseite des Kassettendeckels in einer Endlage positioniert ist, von der Oberseite des Kassettendeckels durch die zweiten Strukturen hindurch Befestigungsmittel in die ersten Strukturen eingeführt werden, um den Rahmen an dem Kassettendeckel zu fixieren. In einer weiteren Alternative können durch die ersten Strukturen hindurch von der Unterseite her Befestigungsmittel mit dem Kassettendeckel verbunden werden, bspw. Schrauben. Die ersten Strukturen können demnach auch Bohrungen in den Laschen umfassen.

Bei einer oder mehreren Ausgestaltungen weist der Rahmen an seiner Außenseite Führungselemente auf, entlang welcher eine Rahmenverlängerung senkrecht zu der Oberseite des Deckels des Leitungsauslasses verschiebbar führbar ist. Außerdem können Aufnahmen für Fixiermittel vorgesehen sein, mittels derer die Rahmenverlängerung an dem Rahmen fixierbar ist. Die Fixiermittel sind bspw. in den Führungselementen vorgesehene Gewinde, in welche eine von außen durch die Rahmenverlängerung geschraubte Schraube eingreift und so die Rahmenverlängerung gegen den Rahmen presst.

Eine Rahmenverlängerung gemäß einem weiteren Aspekt der Erfindung weist eine Korpuswand auf, welche den Rahmen, dessen Kontur folgend, von außen umfasst, wobei die Korpuswand den Rahmen nicht vollständig ein- oder umschließt. Die Rahmenverlängerung kann den Rahmen bspw. C-förmig umfassen. In der Korpuswand sind außerdem Schlitze oder Aussparungen vorgesehen, in welchen die an der Außenseite des Rahmens angeordneten Führungselement aufnehmbar und führbar sind. Von einem ersten Ende der Korpuswand, welches bei darin aufgenommenem Rahmen zu dessen Oberseite weist, kragen zwei oder mehr Befestigungslaschen nach außen aus, vorzugsweise im Wesentlichen rechtwinklig. Die Befestigungslaschen können mit Bohrungen für Schrauben oder ähnliche Befestigungsmittel versehen sein. Der Rahmen des Leitungsauslasses wird in der Rahmenverlängerung vorzugsweise senkrecht zu der Oberseite des Kassettendeckels verschieb- und fixierbar geführt.

Für eine einfache Montage von Rahmen und Rahmenverlängerung können sich die Schlitze oder Aussparungen bis an die Oberkante der Korpuswand erstrecken, so dass die Führungselement des Rahmens von der Oberseite der Rahmenverlängerung in die Schlitze einführbar sind. Vorzugsweise sind in diesem Fall die Schlitze oder Aussparungen in Bereichen der Korpuswand angeordnet, in denen jeweils auch eine Befestigungslasche angeordnet ist. Die Befestigungslasche erstreckt sich vorzugsweise zu beiden Seiten eines jeweiligen Schlitzes oder einer jeweiligen Aussparung, so dass die von dem Schlitz oder der Aussparung separierten Wandbereiche von der Befestigungslasche zusammengehalten werden. Ggf. kann der Schlitz oder die Aussparung sich geringfügig in die Befestigungslasche hinein erstrecken.

Bei einer Ausgestaltung besteht der Leitungsauslass im Wesentlichen aus drei Druckgussteilen, bspw. Zink-Druckguss, nämlich der Abdeckung, dem Deckel und dem Rahmen. Die Konturen der Kulissenführung sind in das Druckgussteil integriert, genauso wie die Führungsmittel in den Deckel integriert sind. Deckel und Rahmen sind also einstückig gefertigt. Durch die Führung der Führungselemente in den Konturen und die integrierte Abstützung des Deckels auf dem Rahmen ist kein Gegenlager an oder auf dem Kassettenrahmen nötig. Der Leitungsauslass kann so auch ohne einen Rahmen eingesetzt werden, bspw. in einer ebenen Fläche montiert.

Da die Kontur am Rahmen in allen Ausführungen, bspw. rund, eckig, schmal, breit, flach oder hoch identisch ist, können die Deckel ohne Änderungen verwendet werden.

Deckel und Rahmen werden zwangsgefügt und verrasten. Lediglich die Abdeckung wird im Deckel mit Schrauben gesichert, so dass die Herstellung nur wenige Schritte erfordert.

Der Rahmen des Leitungsauslasses kann vom Rand des Kassettendeckels aus eingeschoben und an der nach innen weisenden Kante mit in den Kassettendeckel von unten eingreifenden Schrauben fixiert werden. Von oben auf dem Kassettendeckel aufliegende Leisten halten den Rahmen auch bei Belastung sicher. An der Randseite des Rahmens können zu den Seiten nach außen abstehende Vorsprünge vorgesehen sein, welche in entsprechende Aussparungen des Deckelrands eingreifen und so eine Bewegung nach oben verhindern.

Eine auf der Oberseite freiliegende Fläche des Leitungsauslasses kann wegen der ebenen Oberfläche einfach mit geeigneten Dekoren beklebt sein, bspw. mit einer Metallfolie, einem Holzfurnier oder dergleichen.

### Kurze Beschreibung der Zeichnung

Die Erfindung wird im Folgenden anhand eines Ausführungsbeispiels unter Bezugnahme auf die begleitenden Figuren näher erläutert. Alle Figuren sind rein schematisch und nicht maßstäblich. Es zeigen
- Fig. 1: eine Ansicht eines aus dem Stand der Technik bekannten Leitungsauslasses in einer Unterflurkassette in einer ersten, geschlossenen Stellung,
- Fig. 2: eine Ansicht des aus dem Stand der Technik bekannten Leitungsauslasses in der Unterflurkassette in einer zweiten, geöffneten Stellung,
- Fig. 3: eine Detailansicht des aus dem Stand der Technik bekannten Leitungsauslasses ohne die Unterflurkassette,
- Fig. 4: eine Explosionszeichnung des aus dem Stand der Technik bekannten Leitungsauslasses,
- Fig. 5: eine Ansicht eines erfindungsgemäßen Leitungsauslasses in einem Kassettendeckel einer Unterflurkassette in einer ersten, geschlossenen Stellung,
- Fig. 6: eine Darstellung des erfindungsgemäßen Leitungsauslasses in der ersten, geschlossenen Stellung mit teilweise entfernter erster Rahmenseite und sichtbaren Konturen einer Kulissenführung,
- Fig. 7: eine Detaildarstellung der inneren Seite einer zweiten Rahmenseite des erfindungsgemäßen Leitungsauslasses aus Figur 6 mit Teilen von Führungselementen des Deckels,
- Fig. 8: eine Darstellung des erfindungsgemäßen Leitungsauslasses aus Figur 6 in der ersten, geschlossenen Stellung mit angehobener Abdeckung einer Vertiefung in dem Deckel,
- Fig. 9: eine Darstellung des erfindungsgemäßen Leitungsauslasses mit einem aus der ersten, geschlossenen Stellung herausbewegtem Deckel,
- Fig. 10: eine Detaildarstellung einer Rahmenseite des erfindungsgemäßen Leitungsauslasses aus Figur 9 mit Teilen von Führungselementen des Deckels,
- Fig. 11: eine Darstellung des erfindungsgemäßen Leitungsauslasses mit dem Deckel in einer ersten Zwischenposition,
- Fig. 12: eine Detaildarstellung einer Rahmenseite des erfindungsgemäßen Leitungsauslasses aus Figur 11 mit Teilen von Führungselementen des Deckels,
- Fig. 13: eine Darstellung des erfindungsgemäßen Leitungsauslasses mit dem Deckel in einer zweiten Zwischenposition,
- Fig. 14: eine Detaildarstellung einer Rahmenseite des erfindungsgemäßen Leitungsauslasses aus Figur 13 mit Teilen von Führungselementen des Deckels,
- Fig. 15: eine Darstellung des erfindungsgemäßen Leitungsauslasses kurz vor Erreichen der zweiten, offenen Stellung mit teilweise entfernter erster Rahmenseite und sichtbaren Konturen einer Kulissenführung,
- Fig. 16: eine Detaildarstellung einer Rahmenseite des erfindungsgemäßen Leitungsauslasses aus Figur 15 mit Teilen von Führungselementen des Deckels,
- Fig. 17: eine Darstellung des erfindungsgemäßen Leitungsauslasses in der zweiten, offenen Stellung mit teilweise entfernter erster Rahmenseite und sichtbaren Konturen einer Kulissenführung,
- Fig. 18: eine Detaildarstellung einer Rahmenseite des erfindungsgemäßen Leitungsauslasses aus Figur 17 mit Teilen von Führungselementen des Deckels,
- Fig. 19: eine weitere Darstellung des erfindungsgemäßen Leitungsauslasses in der zweiten, offenen Stellung mit teilweise entfernter erster Rahmenseite und sichtbaren Konturen einer Kulissenführung,
- Fig. 20: eine Ansicht des erfindungsgemäßen Leitungsauslasses in einer Unterflurkassette in der zweiten, offenen Stellung,
- Fig. 21: eine Darstellung des erfindungsgemäßen Leitungsauslasses nach einem ersten Schritt beim Verlassen der zweiten, offenen Stellung mit teilweise entfernter erster Rahmenseite und sichtbaren Konturen einer Kulissenführung,
- Fig. 22: eine Detaildarstellung einer Rahmenseite des erfindungsgemäßen Leitungsauslasses aus Figur 21 mit Teilen von Führungselementen des Deckels,
- Fig. 23: eine Darstellung des erfindungsgemäßen Leitungsauslasses mit dem Deckel in der zweiten Zwischenposition,
- Fig. 24: eine Darstellung des erfindungsgemäßen Leitungsauslasses mit dem Deckel in der ersten Zwischenposition,
- Fig. 25: eine Darstellung des erfindungsgemäßen Leitungsauslasses mit einem aus der ersten Zwischenposition herausbewegtem Deckel auf dem Weg in die erste, geschlossene Stellung des Deckels,
- Fig. 26: eine Darstellung des wieder in der ersten, geschlossenen Stellung angelangten Deckels des erfindungsgemäßen Leitungsauslasses mit teilweise entfernter erster Rahmenseite und sichtbaren Konturen einer Kulissenführung,
- Fig. 27: eine Darstellung des Rahmens und der darin angeordneten Konturen der Kulissenführung,
- Fig. 28: ein Detail der zweiten Rahmenseite mit den Konturen der Kulissenführung und Teilen von darin geführten Führungselementen des Deckels,
- Fig. 29: eine Darstellung einer beispielhaften Befestigung der schwenkbaren Abdeckung der Aussparung bzw. Vertiefung im Deckel,
- Fig. 30: eine erfindungsgemäßen Rahmenverlängerung für einen erfindungsgemäßen Leitungsauslass,
- Fig. 31: einen zur Verwendung mit der erfindungsgemäßen Rahmenverlängerung aus Figur 30 eingerichteten Leitungsauslass,
- Fig. 32: die erfindungsgemäße Rahmenverlängerung aus Figur 30 und den zur Verwendung mit der Rahmenverlängerung eingerichteten erfindungsgemäßen Leitungsauslass in einer Position vor dem Zusammenfügen,
- Fig. 33: die erfindungsgemäße Rahmenverlängerung aus Figur 30 und den zur Verwendung mit der Rahmenverlängerung eingerichteten erfindungsgemäßen Leitungsauslass in einer Position während des Zusammenfügens,
- Fig. 34: den mit der erfindungsgemäßen Rahmenverlängerung zusammengefügten erfindungsgemäßen Leitungsauslass in einer ersten Ansicht,
- Fig. 35: eine zweite Ansicht des mit der erfindungsgemäßen Rahmenverlängerung zusammengefügten erfindungsgemäßen Leitungsauslasses,
- Fig. 36: eine Ansicht des mit der erfindungsgemäßen Rahmenverlängerung zusammengefügten und daran fixierten erfindungsgemäßen Leitungsauslasses,
- Fig. 37: eine Ansicht des mit der erfindungsgemäßen Rahmenverlängerung zusammengefügten und daran fixierten erfindungsgemäßen Leitungsauslasses nach dem Einbau in eine Öffnung in einer dünnen Fläche,
- Fig. 38: eine Ansicht der in die Öffnung in der Fläche eingebauten erfindungsgemäßen Rahmenverlängerung mit darin fixiertem erfindungsgemäßen Leitungsauslass von der Unterseite aus gesehen
- Fig. 39: eine Ansicht des mit der erfindungsgemäßen Rahmenverlängerung zusammengefügten und daran fixierten erfindungsgemäßen Leitungsauslasses nach dem Einbau in eine Öffnung in einer dicken Fläche, und
- Fig. 40: eine Darstellung einer weiteren Ausgestaltung der erfindungsgemäßen Rahmenverlängerung mit darin aufgenommenem erfindungsgemäßem Leitungsauslass.

Gleiche oder ähnliche Elemente sind in den Figuren mit gleichen oder ähnlichen Bezugszeichen versehen.

### Beschreibung von Ausführungsbeispielen

Die Figuren 1 bis 4 wurden bereits weiter oben in der Beschreibung des Standes der Technik beschrieben und werden daher nicht erneut erörtert.

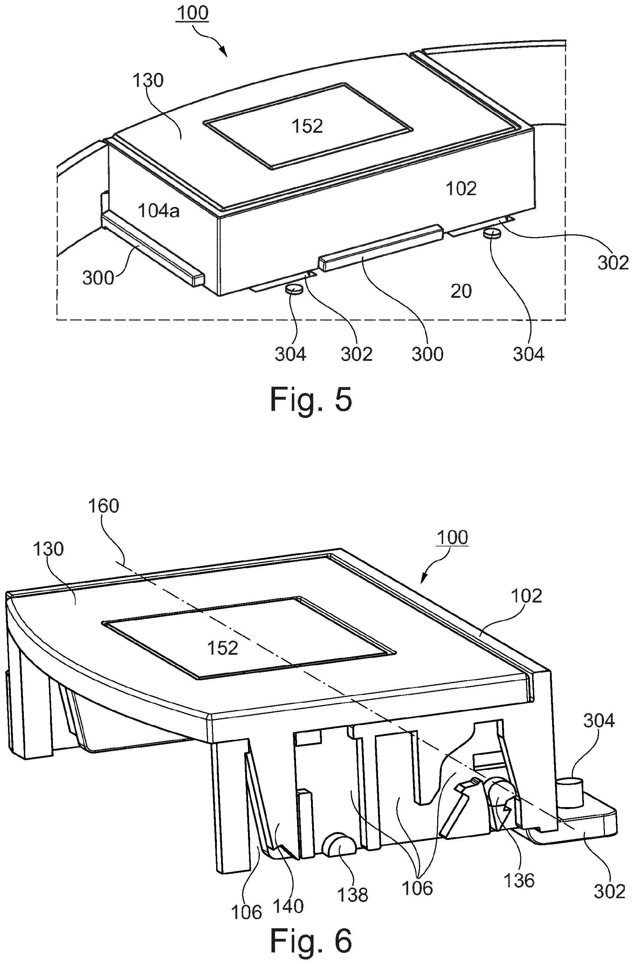

Fig. 5 zeigt eine Ansicht eines erfindungsgemäßen Leitungsauslasses 100 in einem Kassettendeckel 20 einer Unterflurkassette 10 (nicht in der Figur gezeigt) in einer ersten, geschlossenen Stellung. Von dem Leitungsauslass 100 sind nur eine Seite 104a des Rahmens 102 sowie dessen Rückwand 104 weitgehend sichtbar. In dem Rahmen 102 ist ein Deckel 130 gelagert. Der Deckel 130 weist eine Vertiefung 150 auf (in der Figur nicht sichtbar), die mit einer Abdeckung 152 abgedeckt ist. Eine Oberfläche der Abdeckung 152 ist vorzugsweise im Wesentlichen parallel, besonders vorzugsweise flächenbündig mit der Oberfläche 134 des Deckels ausgerichtet. Außen an den Rahmenseiten 104a, 104b oder der Rahmenrückwand 104 sind eine oder mehrere Vorsprünge 300 angeordnet welche, wenn der Rahmen 102 auf der Oberseite des Kassettendeckels 20 positioniert ist, auf dieser Oberseite aufliegen und eine Bewegung des Rahmens 102 in Richtung der Oberseite des Kassettendeckels 20 blockieren.

An der Unterkante der Rahmenrückseite 104 stehen zwei Laschen 302 ab, vorzugsweise zumindest abschnittsweise parallel zu der Oberseite des Deckels 130. Die Laschen 302 weisen eine oder mehrere erste Strukturen 304 auf, welche mit entsprechenden, von der Unterseite des Kassettendeckels 20 aus zugänglichen zweiten Strukturen 306 direkt oder indirekt kooperieren und eine Bewegung des Rahmens 102 parallel zu der Oberfläche des Kassettendeckels 20 verhindern. Die zweiten Strukturen 306 können bspw. Bohrungen oder Löcher sein. Eine direkte Kooperation der ersten und zweiten Strukturen 304, 306 kann bspw. durch in die Bohrungen oder Löcher des Kassettendeckels 20 eingreifende, von der Oberseite der Laschen 302 abstehende Stifte erfolgen. Der Stift kann auch als Niet ausgeführt sein, dessen Kopf erst nach der korrekten Montage des Leitungsauslasses 100 in dem Kassettendeckel 20 ausgeformt wird. Eine indirekte Kooperation der ersten und zweiten Strukturen 304, 306 kann bspw. durch Schrauben bewirkt werden, welche von der Unterseite durch Bohrungen in den Laschen 302 geführt und in den Kassettendeckel 20 geschraubt sind, wenn der Rahmen 102 auf der Oberseite des Kassettendeckels 20 in einer Endlage positioniert ist, um den Rahmen an dem Kassettendeckel 20 zu fixieren. Hier bilden die Bohrungen in den Laschen 302 die ersten Strukturen 304.

Figur 6 zeigt eine Darstellung des erfindungsgemäßen Leitungsauslasses 100 in der ersten, geschlossenen Stellung mit teilweise entfernter erster Rahmenseite 104a und sichtbaren Konturen 106 einer Kulissenführung. Der Leitungsauslass 100 umfasst, wie bereits mit Bezug auf Figur 5 beschrieben, einen Rahmen 102 und einen Deckel 130. Deckel 130 weist eine in der Figur nicht sichtbare Vertiefung 150 auf, welche durch eine Abdeckung 152 abgedeckt ist. In der teilweise entfernten ersten Rahmenseite 104a sind Konturen 106 einer Kulissenführung erkennbar, in welcher an Seiten des Deckels 130 angeordnete erste, zweite und dritte Führungselemente 136, 138 bzw. 140 geführt sind. Die Konturen bilden ein flaches Relief, die Außenseiten der Seitenwände 104a, 104b des Rahmens 102 sind geschlossen. Die gedachte Verbindungslinie der sich an den Seiten des Deckels 130 gegenüberliegenden ersten Führungselemente 136 bildet eine Schwenkachse 160, angedeutet durch die strichpunktierte Linie.

In dieser Figur sind auch die Laschen 302 besser erkennbar, auf deren Oberseiten durch die als Bohrungen ausgeführten ersten Strukturen 304 geführte Schrauben angedeutet sind. Die Konturen 106 und die ersten, zweiten und dritten Führungselemente 136, 138 bzw. 140 sind an der zweiten Rahmenseite 104b des Rahmens 102 und der entsprechenden Seite des Deckels entsprechend vorgesehen.

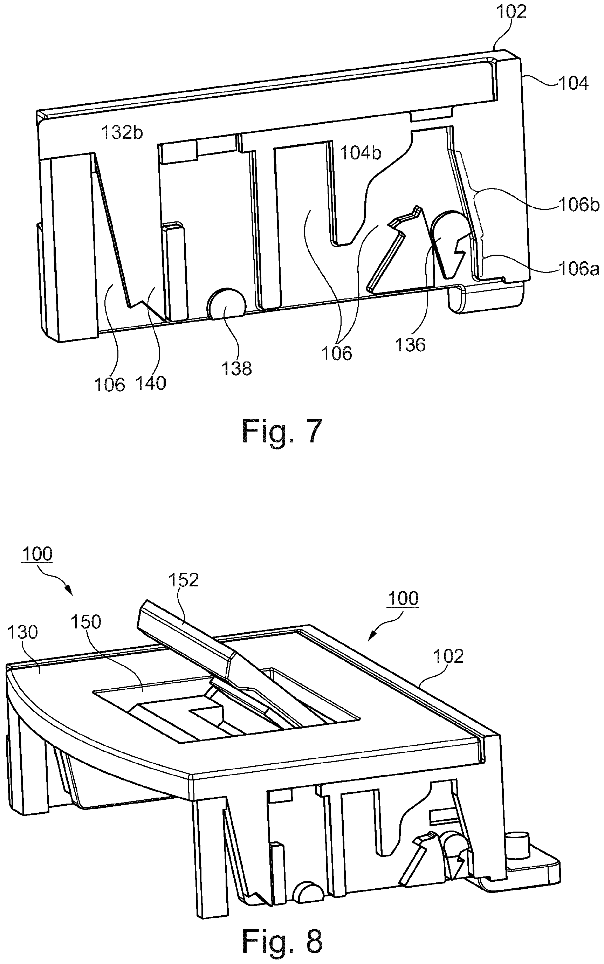

Figur 7 zeigt eine Detaildarstellung der inneren Seite einer zweiten Rahmenseite 104b des erfindungsgemäßen Leitungsauslasses 100 aus Figur 6 mit Teilen von ersten, zweiten und dritten Führungselementen 136, 138 bzw. 140 des Deckels 130. In der Figur ist insbesondere die Ausführung der Konturen 106 des Rahmens 102 als flaches Relief erkennbar. Die ersten, zweiten und dritten Führungselemente 136, 138 bzw. 140 des Deckels enden in den vertieften Bereichen der Konturen 106. Zusammen mit den ansonsten weitgehend geschlossenen Seitenwänden des Deckels 130, welche zwischen den Seiten 104a und 104b des Rahmens 102 geführt sind, ist so eine gute seitliche Führung gewährleistet, die trotz der Verschiebbarkeit der Schwenkachse 160 ein klemmfreies Öffnen und Schließen des Deckels 130 gewährleistet. In dieser Figur ist auch eine besondere Formgebung des Teils der Kontur 106 sichtbar, in welcher das erste Führungselement 136 geführt ist. Hier schließt sich an einen ersten Abschnitt 106a, in welchem das erste Führungselement 136 im Wesentlichen in einem rechten Winkel zu einer Oberkante des Rahmens 102 geführt wird, ein zweiter Abschnitt 106b an, in welchem das erste Führungselement 136 auch eine Bewegung fort von der Rahmenrückwand 104 ausführt. Dadurch wird eine Schwenkbewegung des Deckels 130, dessen hintere Kante bündig mit der Rahmenrückwand 104 abschließt, überhaupt erst ermöglicht. Das erste Führungselement 136 ist außerdem so gestaltet, dass eine Schwenkbewegung in dem ersten Abschnitt 106a und in Teilen des zweiten Abschnitts 106b der Kontur 106 nicht möglich ist. Dies wird bspw. durch eine Form erzielt, die nicht vollständig rund ist.

Figur 8 zeigt eine Darstellung des erfindungsgemäßen Leitungsauslasses 100 aus Figur 6 in der ersten, geschlossenen Stellung mit angehobener Abdeckung 152 einer Vertiefung 150 in dem Deckel 130. In dieser Figur ist gut erkennbar, wie die Abdeckung 152 um eine Schwenkachse herum aufschwenkt, so dass der herausschwenkende Bereich der Abdeckung 152 als Griff verwendet werden kann. Hierzu ist die herausgeschwenkte Kante der Abdeckung 152 zusätzlich etwas verdickt.

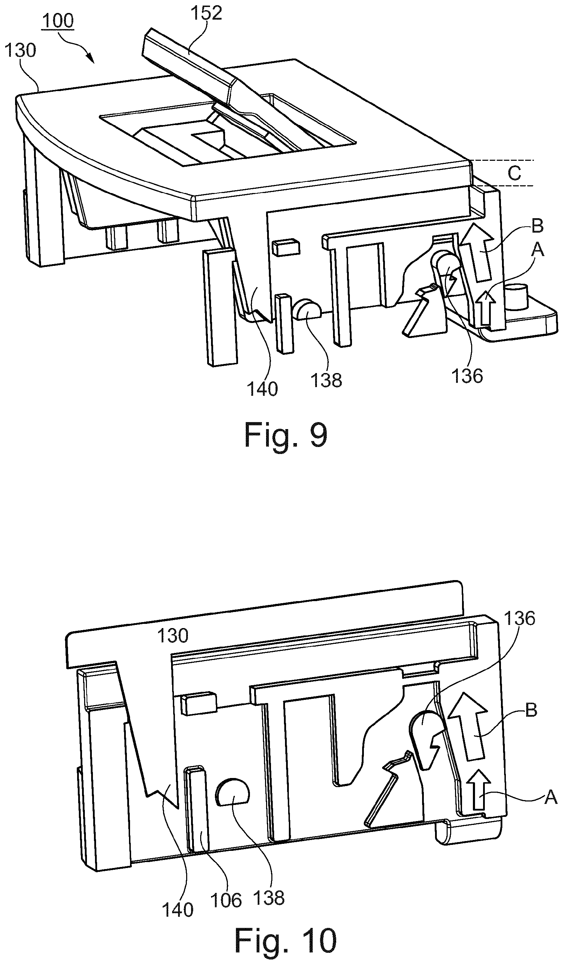

Figur 9 zeigt eine Darstellung des erfindungsgemäßen Leitungsauslasses 100 mit einem aus der ersten, geschlossenen Stellung herausbewegtem Deckel 130. Deutlich erkennbar ist, wie insbesondere die Formgebung des ersten Führungselements 136, zusammen mit der Vorderkante des dritten Führungselements 140, in ihren jeweiligen Konturen 106, eine Schwenkbewegung des Deckels 130 verhindern, und nach einer kurzen geraden Aufwärtsbewegung in Richtung des Pfeils A nur eine längere schräge Aufwärtsbewegung in Richtung des Pfeils B zulassen. Die Aufwärtsbewegung in Richtung des Pfeils A verläuft dabei vorzugsweise mindestens über eine Strecke, welche der Dicke der Deckeloberseite entspricht, in der Figur mit C bezeichnet. So kann die Oberseite des Deckels 130 bündig mit der Oberkante der Rahmenrückwand 104 abschließen, und der Spalt zwischen Deckel 130 und Rahmenrückwand 104 kann in der geschlossenen Position des Deckels 130 klein gehalten werden.

Figur 10 zeigt eine Detaildarstellung einer Rahmenseite des erfindungsgemäßen Leitungsauslasses 100 aus Figur 9 mit Teilen der ersten, zweiten und dritten Führungselemente 136, 138 bzw. 140 des Deckels 130. In dieser Darstellung ist gut erkennbar, wie das erste Führungselement 136 eine Schwenkbewegung des Deckels 130 effektiv verhindert, unterstützt von der Vorderkante des dritten Führungselements 140. Das zweite Führungselement 138 könnte ebenfalls dazu beitragen, eine Schwenkbewegung des Deckels 130 zu verhindern, wenn ihm zugewandte Seite der zwischen dem zweiten und dritten Führungselement 138 bzw. 140 liegenden Kontur 106 eine entsprechende Schrägung aufweisen würde.

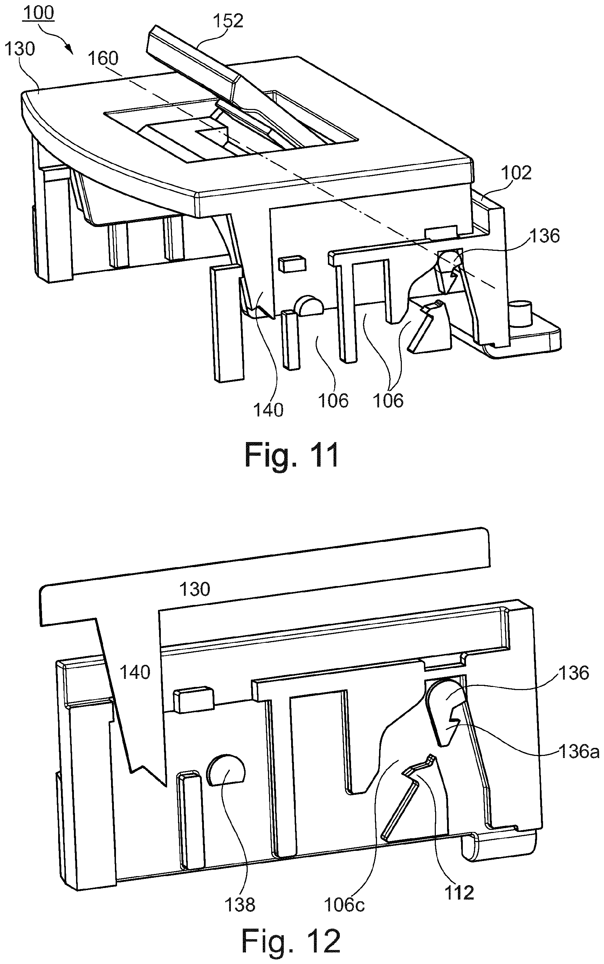

Figur 11 zeigt eine Darstellung des erfindungsgemäßen Leitungsauslasses 100 mit dem Deckel in einer ersten Zwischenposition. In dieser Darstellung ist gut erkennbar, wie die ersten und dritten Führungselemente 136 bzw. 140 bis zum Erreichen der ersten Zwischenposition das Schwenken des Deckels 130 verhindert haben. In der ersten Zwischenposition liegt das erste Führungselement 136 mit einer Oberkante an einem Anschlag in der Kontur 106 an, so dass eine weitere Aufwärtsbewegung nicht möglich ist. Die hakenartige Verlängerung des ersten Führungselements 136, die eine erste Rastkontur 136a bildet, liegt nun vollständig in einem freien Raum der Kontur 106, so dass eine Drehbewegung der durch die an beiden Seiten des Deckels 130 angeordneten ersten Führungselemente 136 geschaffene Schwenkachse 160 möglich ist.

Figur 12 zeigt eine Detaildarstellung einer Rahmenseite des erfindungsgemäßen Leitungsauslasses 100 aus Figur 11 mit Teilen von Führungselementen 136, 138 und 140 des Deckels 130. Auch in dieser Darstellung ist gut erkennbar, wie die Oberkante des ersten Führungselements 136 an einem Ende der Kontur 106 anschlägt, so dass eine weitere Aufwärtsbewegung nicht mehr möglich ist. Es ist lediglich eine Drehbewegung um die Schwenkachse 106 möglich. In dieser Darstellung ist ebenfalls eine zu der ersten Rastkontur 136a passende zweite Ratskontur 112 erkennbar. Deren Funktion weiter unten näher erläutert wird.

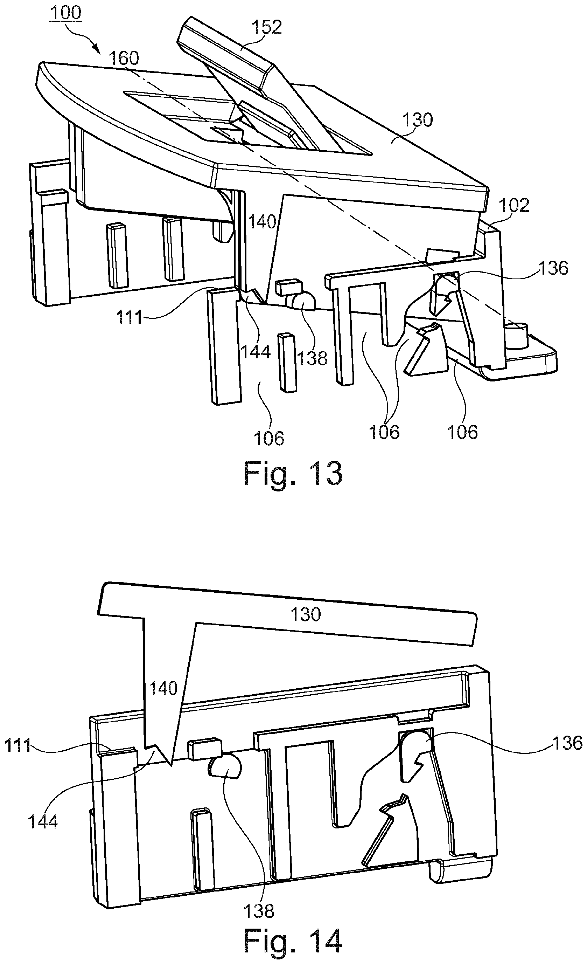

Figur 13 zeigt eine Darstellung des erfindungsgemäßen Leitungsauslasses 100 mit dem Deckel 130 in einer zweiten Zwischenposition. Die zweite Zwischenposition wird durch eine Drehbewegung des Deckels 103 um die Schwenkachse 160 erreicht, die durch das Anschlagen des zweiten Führungselements 138 an einem Anschlag der Kontur 106 begrenzt wird. Eine am unteren Ende des dritten Führungselements 140, das zugleich die Funktion eines Abstützelements übernimmt, befindliche Auflagefläche 144 liegt nun so zu einer Stützfläche 111 des Rahmens 102, dass sie, nach einem Schwenken um eine durch die gegenüberliegenden zweiten Führungselemente 138 gebildete Schwenkachse, durch eine Bewegung des Deckels 130 parallel zu einer Oberkante 110 des Rahmens auf die Stützfläche 111 des Rahmens 102 aufschiebbar ist.

Figur 14 zeigt eine Detaildarstellung einer Rahmenseite des erfindungsgemäßen Leitungsauslasses 100 aus Figur 13 mit Teilen von Führungselementen 136, 138 und 104 des Deckels 130. In dieser Darstellung ist gut erkennbar, wie die Auflagefläche 144 nach dem Schwenken um die durch die gegenüberliegenden zweiten Führungselemente 138 gebildete Schwenkachse auf die Stützfläche 111 des Rahmens 102 aufschiebbar sein wird. Das zweite Führungselement 138 verhindert dabei ein weiteres Aufschwenken des Deckels 130 um die Schwenkachse 160.

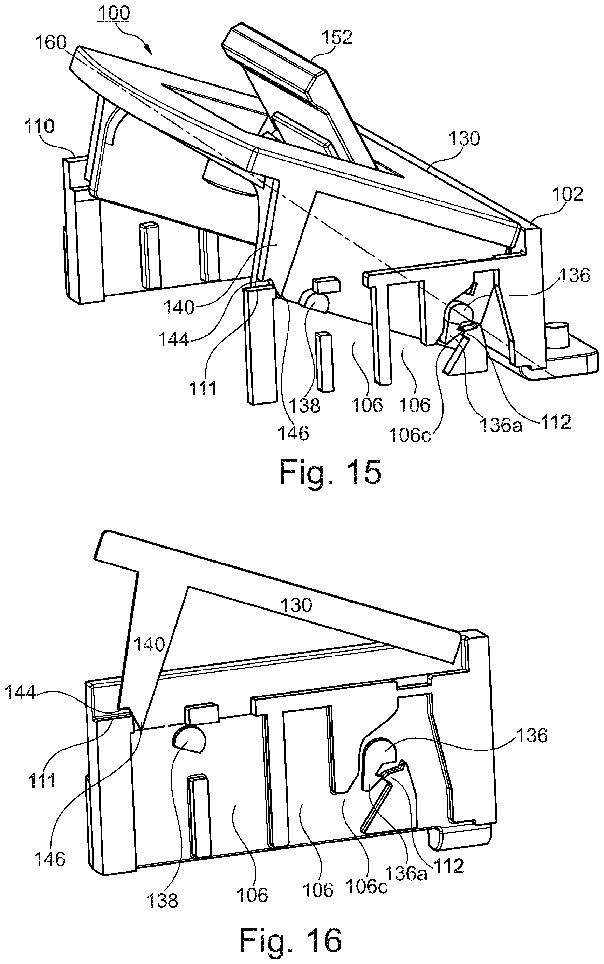

Figur 15 zeigt eine Darstellung des erfindungsgemäßen Leitungsauslasses 100 kurz vor Erreichen der zweiten, offenen Stellung mit teilweise entfernter erster Rahmenseite 104a und sichtbaren Konturen einer Kulissenführung 106. Der Deckel 130 ist bereits um die durch die gegenüberliegenden zweiten Führungselemente 138 gebildete Schwenkachse geschwenkt und parallel zu der Oberkante 110 des Rahmens 102 verschoben, so dass sich die Auflagefläche 144 über der Stützfläche 111 befindet. Die Verschiebung des Deckels 130 parallel zu der Oberkante 110 des Rahmens 102 wird durch einen Anschlag 146 begrenzt, der an eine Kante der Stützfläche 111 anstößt.

Durch das Schwenken um die durch die gegenüberliegenden zweiten Führungselemente 138 gebildete Schwenkachse und die Verschiebung des Deckels 130 parallel zu der Oberkante 110 des Rahmens 102 ist das erste Führungselement 136 in einen zu dem ersten und dem zweiten Abschnitt 106a, 106b der Kontur 106 benachbarten dritten Abschnitt 106c gelangt. Dabei ist die erste Rastkontur 136a so zu der zweiten Rastkontur 112 positioniert, dass diese bei einem Absenken des Deckels 130 und nach einer Verschiebung parallel zu der Oberkante 110 des Rahmens 102 in entgegengesetzter Richtung zu der vorherigen Verschiebung ineinandergreifen und den Deckel 130 gegen eine Schwenkbewegung um die Schwenkachse 160 und/oder eine durch die Berührungspunkte 111 und 144 gebildete Achse sichern.

Figur 16 zeigt eine Detaildarstellung einer zweiten Rahmenseite 104b des erfindungsgemäßen Leitungsauslasses 100 aus Figur 15 mit Teilen von Führungselementen 136, 138 und 140 des Deckels 130. In dieser Darstellung ist die Positionierung der Auflagefläche 144 über der Stützfläche 111 sowie das Anliegen des Anschlags 146 an der Kante der entsprechenden Kontur 106 gut erkennbar. Auch die Positionierung der ersten Ratskontur 136a zu der zweiten Rastkontur 112 ist gut erkennbar. Insbesondere wird in dieser Darstellung klar, wie eine Schwenkbewegung um den Punkt, an dem der Anschlag 146 an der entsprechenden Kontur 106 anliegt, und ein Absenken des Deckels 130 die erste und zweite Rastkontur miteinander in Eingriff bringen wird.

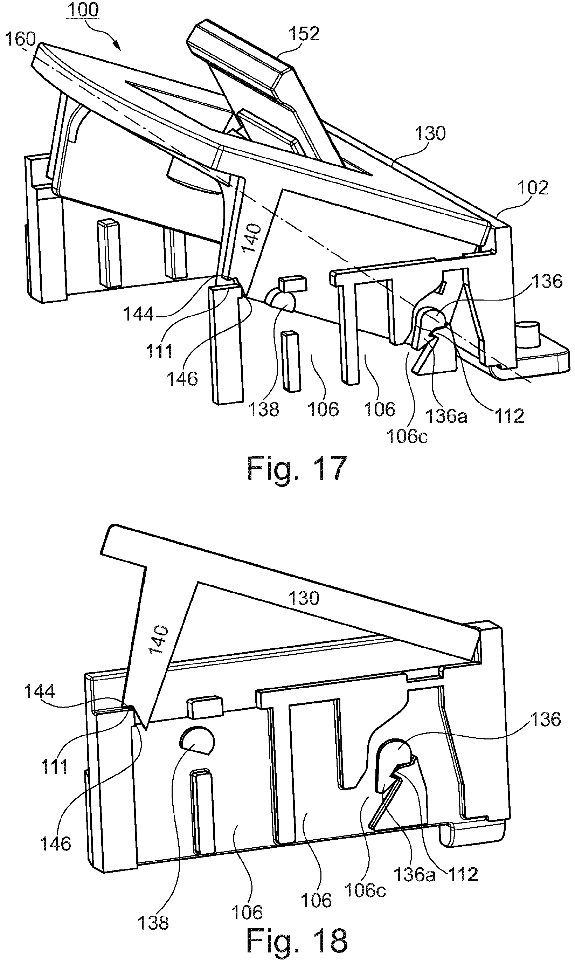

Figur 17 zeigt eine Darstellung des erfindungsgemäßen Leitungsauslasses 100 in der zweiten, offenen Stellung mit teilweise entfernter erster Rahmenseite 104a und sichtbaren Konturen 106 einer Kulissenführung. In dieser Darstellung ist gut erkennbar, wie die Auflagefläche 144 auf der Stützfläche 111 aufliegt und den Deckel 130 in der geöffneten Stellung hält. Zugleich befinden sich die erste und die zweite Rastkontur 136a, 112 in Eingriff miteinander, so dass das Anheben des Deckels 130 in der Nähe der Schwenkachse 160 verhindert wird. Die Abdeckung 152 ist noch geöffnet, kann aber nun wieder geschlossen werden, so dass der Leitungsauslass 100 in der geöffneten Stellung verbleiben und nicht unbeabsichtigt geöffnet werden kann.

Figur 18 zeigt eine Detaildarstellung der zweiten Rahmenseite 104b des erfindungsgemäßen Leitungsauslasses 100 aus Figur 17 mit Teilen von Führungselementen 136, 138 und 140 des Deckels 130. Besonders gut erkennbar sind hier die in Eingriff stehenden ersten und zweiten Rastkonturen 136a, 112 und die Abstützung der Auflagefläche 144 auf der Stützfläche 111.

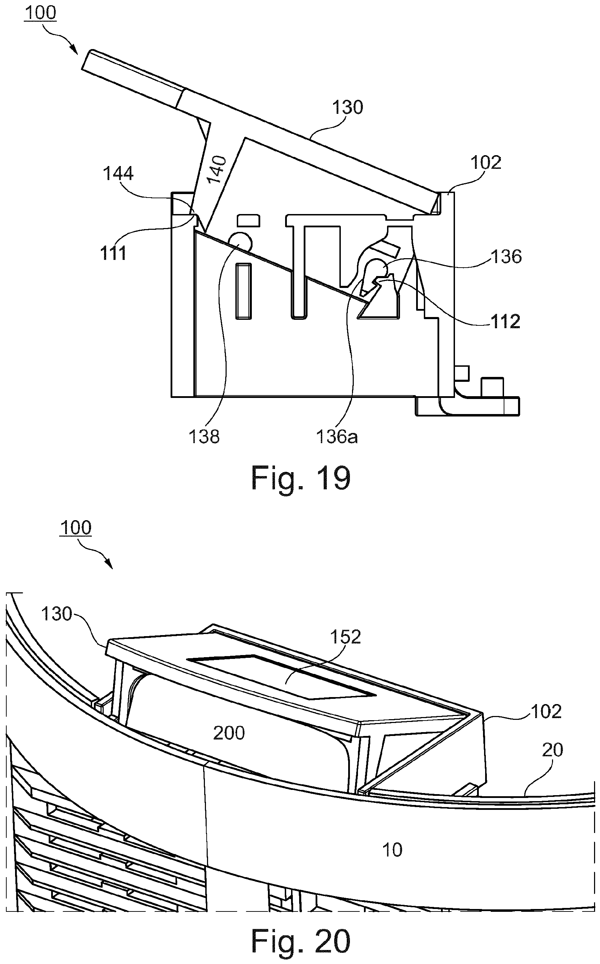

Figur 19 zeigt eine weitere Darstellung des erfindungsgemäßen Leitungsauslasses 100 in der zweiten, offenen Stellung mit teilweise entfernter erster Rahmenseite 104a und sichtbaren Konturen einer Kulissenführung. Auch in dieser Darstellung ist noch einmal gut erkennbar, wie die ersten und zweiten Rastkonturen 136a, 112 in Eingriff stehen und die Auflagefläche 144 sich auf der Stützfläche 111 abstützt.

Figur 20 zeigt eine Ansicht des erfindungsgemäßen Leitungsauslasses 100 in einer Unterflurkassette 10 in der zweiten, offenen Stellung. Leitungsauslass 100 ist in den Kassettendeckel 20 eingesetzt, von dem hier nur der Rand erkennbar ist. Die Abdeckung 152 des Deckels 130 des Leitungsauslasses 100 ist geschlossen und schließt im Wesentlichen flächenbündig mit der Deckeloberfläche 134 ab. Die durch den geöffneten Deckel 130 gebildete Öffnung ist mit einem Dichtelement 200 gegen das Eindringen von Staub und Schmutz in die Unterflurkassette 10 gesichert. Das Dichtelement 200 kann bspw. eine Bürste oder ein flexibles Schaumstoffelement umfassen. Leitungen und Kabel verdrängen lokal die Fasern der Bürste oder das Schaumstoffelement, so dass der überwiegende Teil der Öffnung verschlossen bleibt.

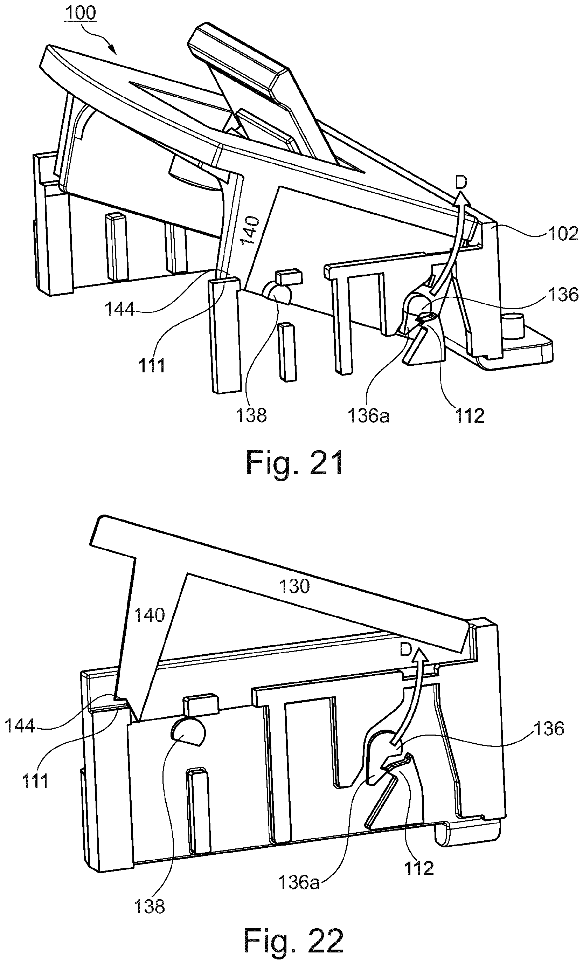

Figur 21 zeigt eine Darstellung des erfindungsgemäßen Leitungsauslasses 100 nach einem ersten Schritt beim Verlassen der zweiten, offenen Stellung mit teilweise entfernter erster Rahmenseite 104a und sichtbaren Konturen 106 einer Kulissenführung. Um den Deckel 130 in die in der Darstellung gezeigte Stellung zu bringen wurde der Deckel 130 zunächst um die Schwenkachse 160 geschwenkt, so dass die Auflagefläche 144 nicht mehr auf der Stützfläche 111 aufliegt, und anschließend in Richtung der Öffnung des Leitungsauslasses 100 geschoben. Die erste und zweite Rastkontur 136a, 112 stehen nun nicht mehr in Eingriff, und das erste Führungselement 136 kann nach oben in Richtung des Pfeils D bewegt werden.

Figur 22 zeigt eine Detaildarstellung der zweiten Rahmenseite 104b des erfindungsgemäßen Leitungsauslasses 100 aus Figur 21 mit Teilen von Führungselementen 136, 138 und 140 des Deckels 130. Die Beschreibung der in der Figur sichtbaren Elemente entspricht derjenigen von Figur 21.

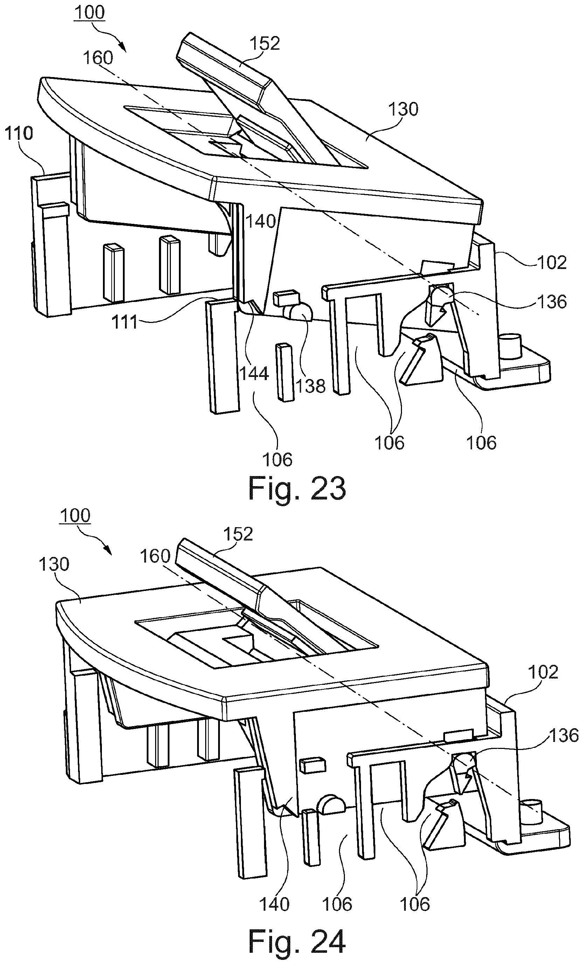

Figur 23 zeigt eine Darstellung des erfindungsgemäßen Leitungsauslasses 100 mit dem Deckel 130 in der zweiten Zwischenposition. Um den Deckel 130 aus der in Figur 22 gezeigten Stellung in die in der Figur 23 gezeigte Stellung zu bringen, wurde das erste Führungselement 136 entlang des in Figur 22 dargestellten Pfeils D nach oben verschoben, bis es an die Kontur 106 anschlägt. Durch die Verschiebung ist auch die Auflagefläche 144 von der Stützfläche 111 wegbewegt, so dass das dritte Führungselement 140 nun in die entsprechende Kontur 106 hineinbewegt werden kann, wenn der Deckel 130 um die Schwenkachse 160 nach unten geschwenkt wird.

Figur 24 zeigt den Deckel 130 in der nach unten geschwenkten Stellung. Da die Vorderkante des dritten Führungselements 140 die Schwenkbewegung begrenzt liegt Deckel 130 nun wieder im Wesentlichen parallel zu der Oberkante 110 des Rahmens 102.

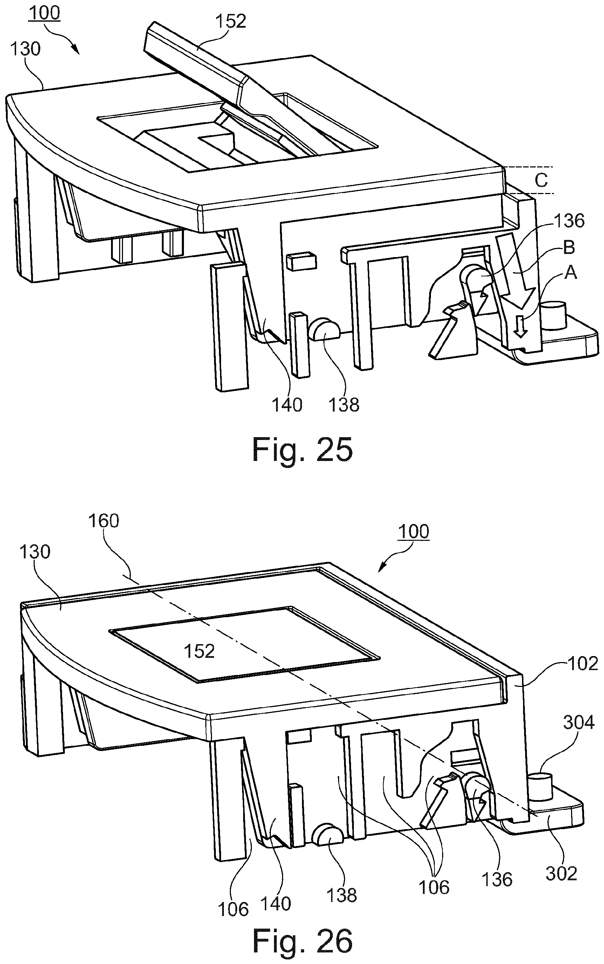

Figur 25 zeigt eine Darstellung des erfindungsgemäßen Leitungsauslasses 100 mit einem aus der ersten Zwischenposition herausbewegtem Deckel 130 auf dem Weg in die erste, geschlossene Stellung des Deckels 130. Die Vorderkante des dritten Führungselements 140 und das erste Führungselement 136 in ihren jeweiligen Konturen erzwingen eine Verschiebung zuerst in Richtung des Pfeils B, und anschließend in Richtung des Pfeils A.

Figur 26 zeigt eine Darstellung des wieder in der ersten, geschlossenen Stellung angelangten Deckels 130 des erfindungsgemäßen Leitungsauslasses 100 mit teilweise entfernter erster Rahmenseite 104a und sichtbaren Konturen 106 einer Kulissenführung. Diese Darstellung entspricht derjenigen der Figur 6.

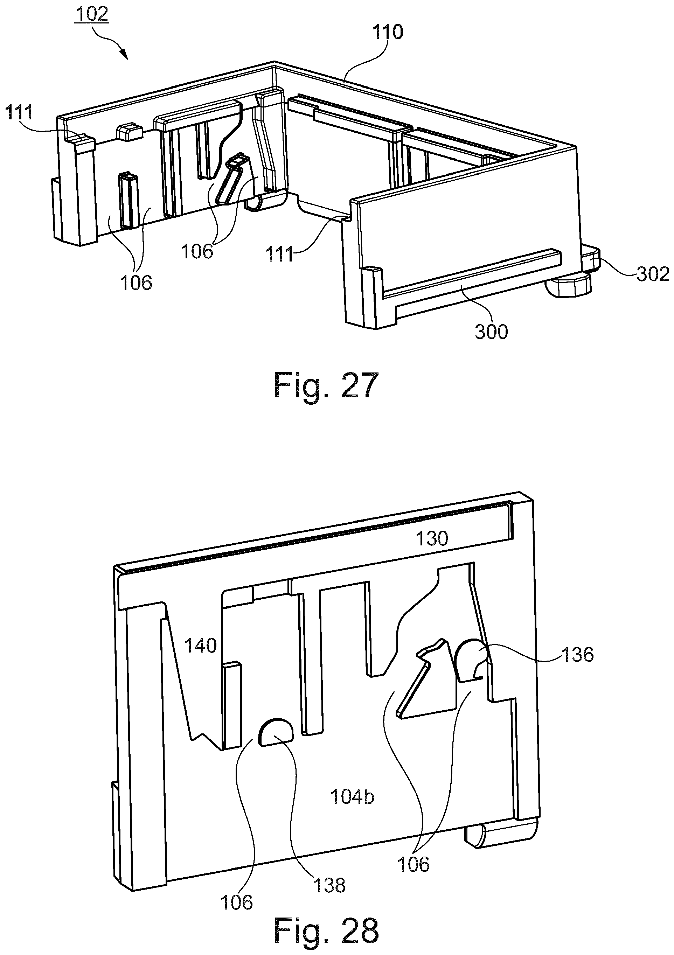

Figur 27 zeigt eine Darstellung des Rahmens 102 und der darin angeordneten Konturen 106 der Kulissenführung. In dieser Darstellung ist gut erkennbar, wie die Konturen 106 der Kulissenführung Teile der Rahmenseiten bilden. Außerdem sind die Vorsprünge 300 erkennbar, mit denen sich der Rahmen 102 auf dem Kassettendeckel 20 abstützt, sowie Teile der Laschen 302, welche von unten unter den Kassettendeckel 20 greifen. Der Rahmen kann bspw. in einem Druckgießverfahren, durch spanabhebende Verfahren oder durch 3D-Druck gefertigt werden.

Figur 28 zeigt ein Detail der zweiten Rahmenseite 104b mit den Konturen 106 der Kulissenführung und Teilen von darin geführten Führungselementen 136, 138 und 140 des Deckels 130. Der in der Figur gezeigte Rahmen ist höher als die in den anderen Figuren gezeigten Rahmen. Die Höhe kann ohne Veränderung der Konturen 106 und des Deckels 130 mit seinen Führungselementen 136, 138 und 140 leicht angepasst werden, wobei der konstruktive Aufwand gering bleibt. Eine größere Höhe kann bspw. bei einem besonders dicken Bodenbelag erforderlich sein.

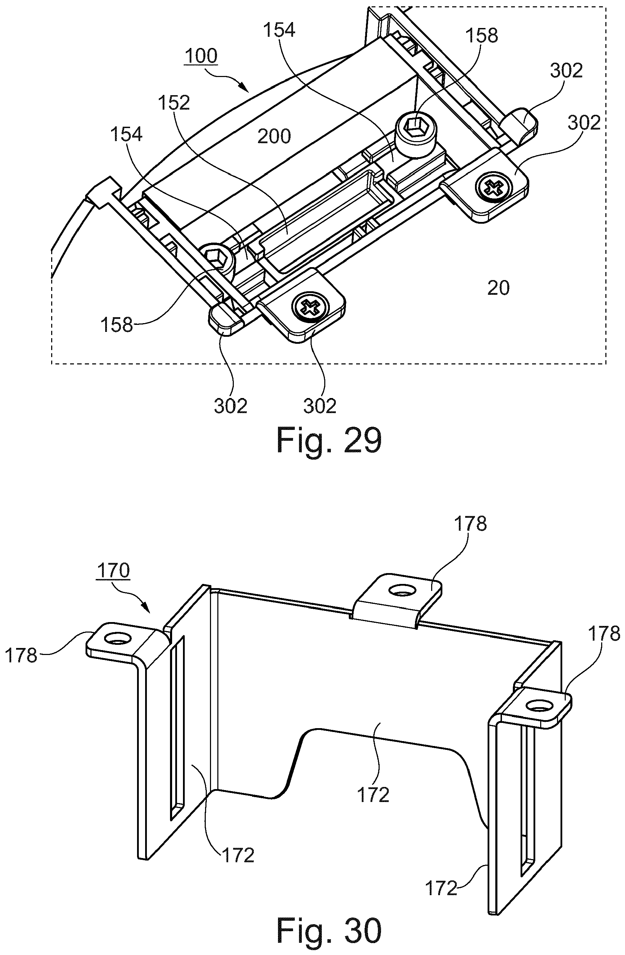

Figur 29 zeigt eine Darstellung einer beispielhaften Befestigung der schwenkbaren Abdeckung 152 der Aussparung 150 bzw. Vertiefung im Deckel 130. In der Darstellung ist der Leitungsauslass 100 von seiner Unterseite in einem Kassettendeckel 20 montiert gezeigt. Die Vertiefung selbst 150 ist in dieser Ansicht nicht erkennbar. Die Abdeckung 152 weist zwei seitlich abstehende Achsstummel 154 auf, welche in einer entsprechenden, an der Unterseite des Deckels 130 vorgesehenen Lagerstrukturen 156 beweglich gelagert sind. Schrauben 158 sichern die Abdeckung 152 vor dem Herausfallen. Ebenfalls erkennbar sind die Laschen 302, welche vom Rahmen 102 ausgehend von der Unterseite unter den Kassettendeckel 20 greifen (wegen der Ansicht von unten in der Figur über die Oberseite). Die Laschen 302 können mit Befestigungsmitteln mit dem Kassettendeckel 20 verbunden sein, bspw. Schrauben, wie in der Figur gezeigt. Dichtelement 200 stellt eine Dichtung gegen das Eindringen von Staub und Schmutz in die Unterflurkassette bei geöffnetem Leitungsauslass 100 auch bei hindurchgeführten Kabeln und Leitungen sicher.

Die Fertigung und Bereitstellung von Rahmen in unterschiedlichen Höhen kann zu nicht unerheblichem Aufwand führen. Daher kann bei einer oder mehreren Ausgestaltungen eine variable Rahmenverlängerung zum Einsatz kommen.

Figur 30 zeigt eine erfindungsgemäßen Rahmenverlängerung 170 für einen erfindungsgemäßen Leitungsauslass. Die Rahmenverlängerung 170 umfasst drei Korpuswände 172, welche die Rahmenverlängerung 170 zu drei Seiten begrenzen. Zu einer vierten Seite ist die Rahmenverlängerung 170 offen. An den Korpuswänden 172 sind Laschen 178 angeordnet, mit denen die Rahmenverlängerung 170 an einer Fläche, bspw. einem Kassettendeckel einer Unterflurkassette, befestigt werden kann. Dazu können die Laschen 178 bspw. Bohrungen zur Durchführung von Schrauben aufweisen. In den Korpuswänden sind Schlitze oder Aussparungen 174 vorgesehen, in denen ein Führungselement des Leitungsauslasses 100 verschiebbar aufgenommen werden kann.

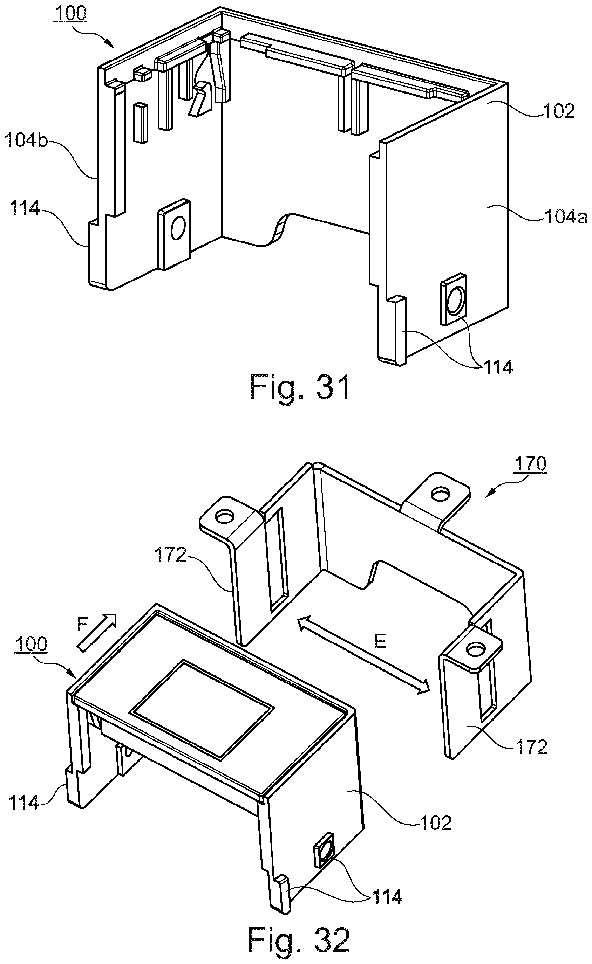

Figur 31 zeigt einen zur Verwendung mit der erfindungsgemäßen Rahmenverlängerung 170 aus Figur 30 eingerichteten Leitungsauslass 100. Der Leitungsauslass 100 ist im Wesentlichen mit den zuvor beschriebenen Leitungsauslassen 100 identisch. Die identischen Elemente werden hier nicht erneut beschrieben. Abweichend von den zuvor beschriebenen Leitungsauslassen 100 sind an den Außenseiten der ersten und zweiten Rahmenseiten 104a, 104b Führungselemente 114 angeordnet, welche nach außen von der jeweiligen Rahmenwand 104a, 104b abstehen und welche im montierten Zustand mit den Schlitzen oder Aussparungen 174 bzw. Kanten der Korpuswände 172 der Rahmenverlängerung 170 zusammenwirken und den Leitungsauslass 100 in der Rahmenverlängerung 170 verschiebbar führen. Die Führungselemente 114 sind dabei so gestaltet, dass ein Verkippen des Leitungsauslasses 100 in der Rahmenverlängerung 170 verhindert wird.

Figur 32 zeigt die erfindungsgemäße Rahmenverlängerung 170 aus Figur 30 und den zur Verwendung mit der Rahmenverlängerung 170 eingerichteten erfindungsgemäßen Leitungsauslass 100 in einer Position vor dem Zusammenfügen. Um den Leitungsauslass 100 in die Rahmenverlängerung 170 einzusetzen, müssen die beiden gegenüberliegenden Korpuswände 172 etwas in Richtung des Doppelpfeils E auseinanderbewegt werden, damit der Leitungsauslass 100 in Richtung des Pfeils F in die Rahmenverlängerung 170 eingesetzt werden und die Führungselemente 114 in die Schlitze bzw. Aussparungen 172 eingreifen bzw. an den jeweiligen Vorderkanten der gegenüberliegenden Korpuswände 172 anliegen können.

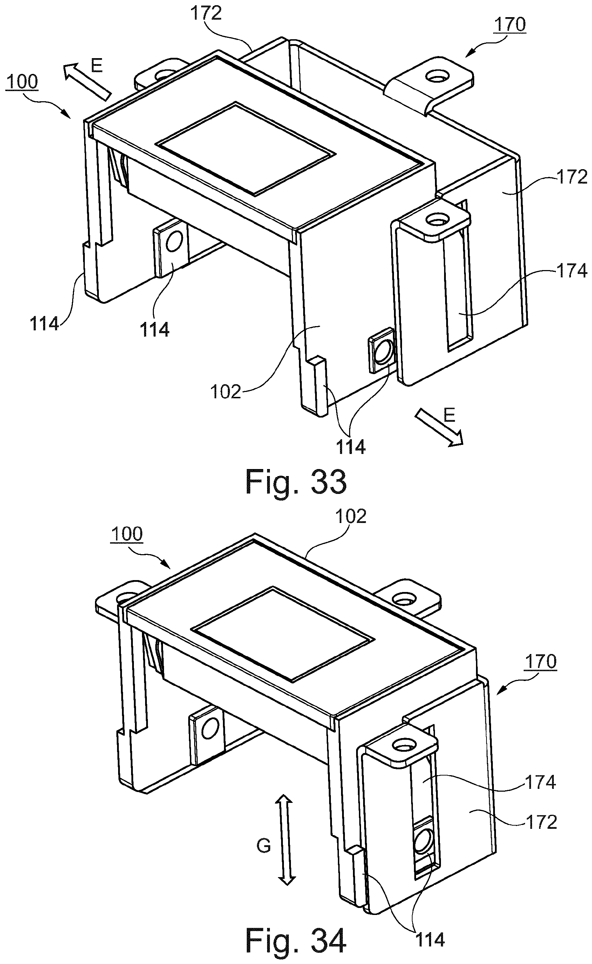

Figur 33 zeigt die erfindungsgemäße Rahmenverlängerung 170 aus Figur 30 und den zur Verwendung mit der Rahmenverlängerung 170 eingerichteten erfindungsgemäßen Leitungsauslass 100 in einer Position während des Zusammenfügens. In dieser Darstellung ist gut erkennbar, dass die Korpuswände 172 leicht in Richtung der Pfeile E auseinanderbewegt werden müssen, damit der Leitungsauslass 100 vollständig in die Rahmenverlängerung 170 eingeführt werden und die Führungselemente 114 in die Schlitze oder Aussparungen 174 gelangen können.

Figur 34 zeigt den mit der erfindungsgemäßen Rahmenverlängerung 170 zusammengefügten erfindungsgemäßen Leitungsauslass 100 in einer ersten Ansicht. In dieser Darstellung ist gut erkennbar, wie die Führungselemente 114 in den Schlitzen oder Aussparungen 174 geführt sind bzw. an der Vorderkante der Korpuswände 172 anliegen. Eine Verschiebung des Leitungsauslasses 100 in Richtung des Pfeils G bleibt weiterhin möglich.

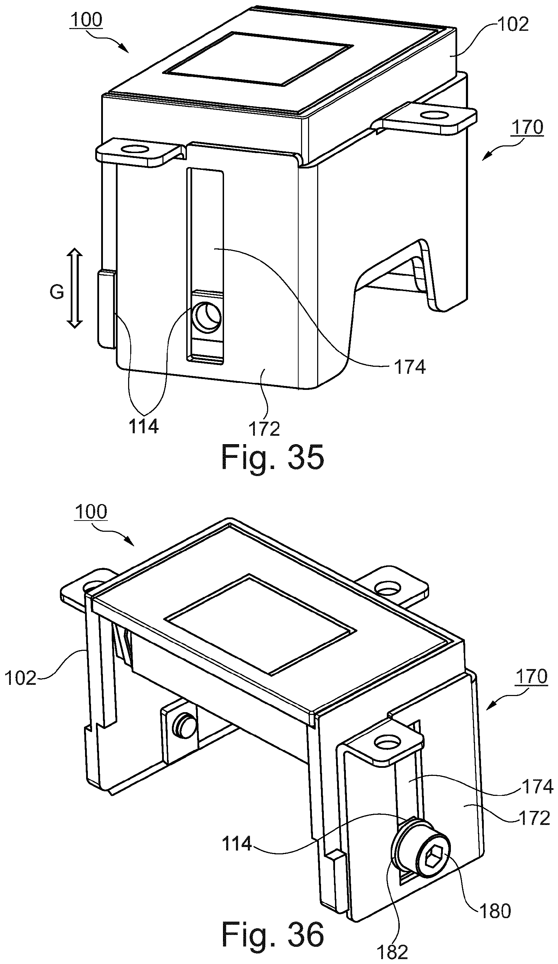

Figur 35 zeigt eine zweite Ansicht des mit der erfindungsgemäßen Rahmenverlängerung 170 zusammengefügten erfindungsgemäßen Leitungsauslasses 100. Auch in dieser Darstellung ist gut erkennbar, wie die Führungselemente 114 in den Schlitzen oder Aussparungen 174 geführt sind bzw. an der Vorderkante der Korpuswände 172 anliegen, und wie eine Verschiebung des Leitungsauslasses 100 in Richtung des Pfeils G weiterhin möglich bleibt.

Die Figuren 34 und 35 zeigen außerdem, wie die Gestaltung der Führungselemente 114 ein Verkippen des Leitungsauslasses 100 in der Rahmenverlängerung 170 verhindern können, selbst wenn der Leitungsauslass 100 in die oberste Position geschoben wird.

Figur 36 zeigt eine Ansicht des mit der erfindungsgemäßen Rahmenverlängerung 170 zusammengefügten und daran fixierten erfindungsgemäßen Leitungsauslasses 100.

Die Darstellung entspricht im Wesentlichen der aus Figur 34. Zusätzlich sind nun Schrauben 180 von außen in die in den Schlitzen 174 gelagerten Führungselemente 114 geschraubt, deren Köpfe eine Unterlegscheibe 182 gegen die Außenseite der Korpuswand 172 pressen und so eine kraftschlüssige Verbindung von Leitungsauslass 100 und Rahmenverlängerung 170 herstellen, welche ein Verschieben der beiden Teile zueinander verhindert.

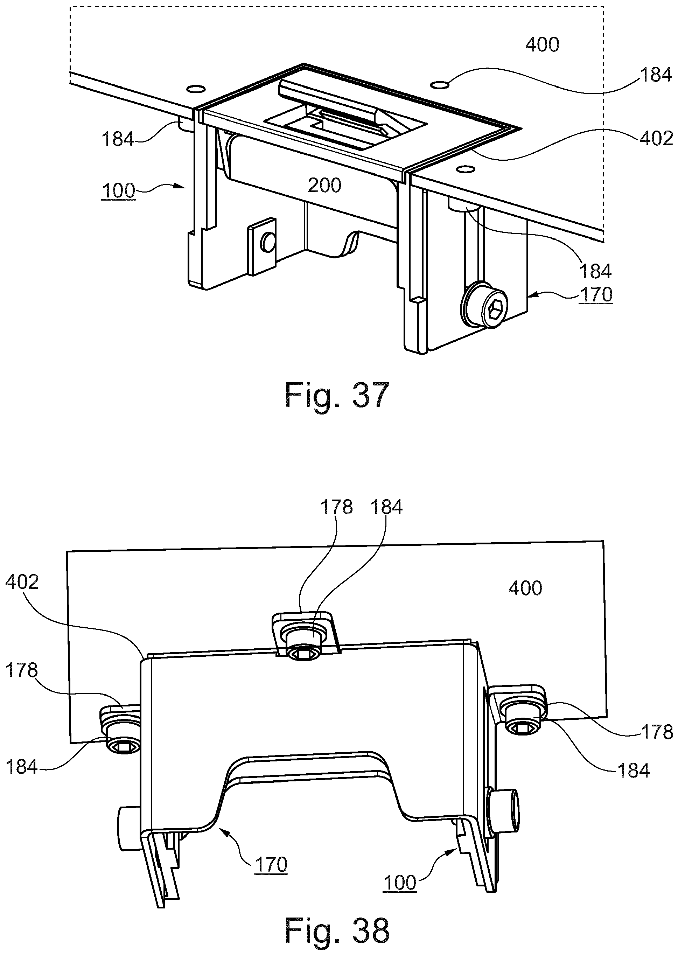

Figur 37 zeigt eine Ansicht des mit der erfindungsgemäßen Rahmenverlängerung 170 zusammengefügten und daran fixierten erfindungsgemäßen Leitungsauslasses 100 nach dem Einbau in eine Öffnung 402 in einer dünnen Fläche 400. Die Rahmenverlängerung 170 ist von unten mit Schrauben 184 mit der Fläche 400 verschraubt.

Figur 38 zeigt eine Ansicht der in die Öffnung 402 in der Fläche 400 eingebauten erfindungsgemäßen Rahmenverlängerung 170 mit darin fixiertem erfindungsgemäßen Leitungsauslass 100 von der Unterseite aus gesehen. In dieser Darstellung sind die zur Befestigung der Rahmenverlängerung 170 durch Bohrungen in den Laschen 178 geführten Schrauben 184 gut erkennbar.

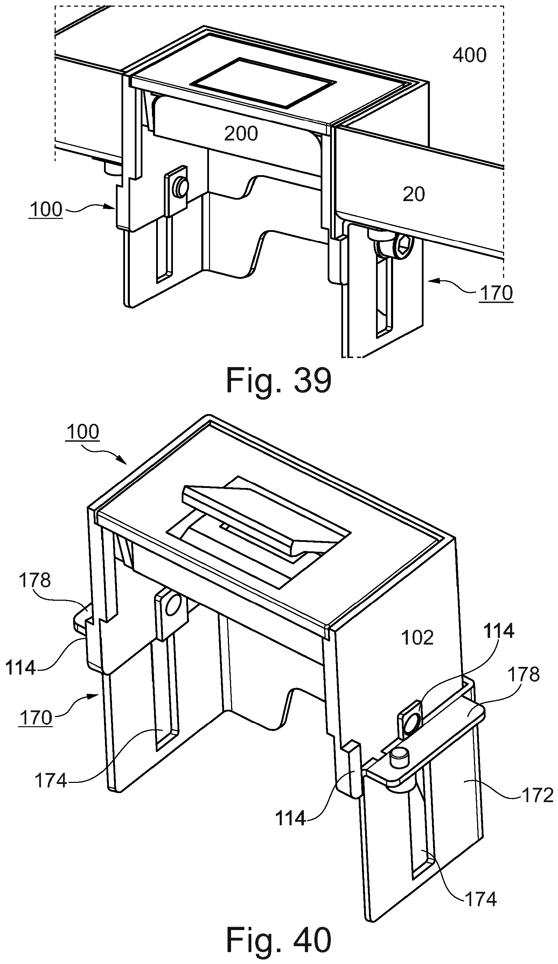

Figur 39 zeigt eine Ansicht des mit der erfindungsgemäßen Rahmenverlängerung 170 zusammengefügten und daran fixierten erfindungsgemäßen Leitungsauslasses 100 nach dem Einbau in eine Öffnung 402 in einer dicken Fläche 400. Wie mit Bezug auf Figur 37 beschrieben ist die Rahmenverlängerung 170 von unten mit Schrauben 184 mit der Fläche 400 verschraubt. Die dicke Fläche 400 ist in diesem Fall eine dünne Fläche mit sich wannenartig nach oben erstreckenden Wänden, bspw. der Boden eines Kassettendeckels 20, der nach der Montage mit einem Bodenbelag ausgefüllt wird. Um einen sauberen, flächenbündigen Abschluss der Oberseite des Leitungsauslasses 100 mit dem in die Wanne des Kassettendeckels 20 eingelegten oder eingefüllten Bodenbelag (nicht in der Figur gezeigt) zu erhalten, ist der Leitungsauslass 100 in der Rahmenverlängerung 170 nach oben verschoben und dort fixiert worden.

Figur 40 zeigt eine Darstellung einer alternativen erfindungsgemäßen Rahmenverlängerung 170 mit darin aufgenommenem erfindungsgemäßem Leitungsauslass 100. Auf die zuvor beschriebenen Elemente des Leitungsauslasses 100 wird nicht erneut eingegangen. An der ersten und zweiten Rahmenseite 104a, 104b sind Führungselemente 114 angeordnet, welche nach außen von der jeweiligen Rahmenwand 104a, 104b abstehen. Die Führungselemente 114 greifen verschiebbar in entsprechende Schlitze oder Aussparungen 174 in der Rahmenverlängerung 170 ein oder sind an einer Kante der Korpuswand 172 der Rahmenverlängerung 170 entlang verschiebbar geführt. Die Führungselemente 114 sind dabei so gestaltet, dass ein Verkippen des Leitungsauslasses 100 in der Rahmenverlängerung 170 verhindert wird. Die Rahmenverlängerung 170 wird mit dem Kassettendeckel 20 (nicht in der Figur gezeigt) verbunden, bspw. durch Befestigungslaschen 178, die mit dem Kassettendeckel 20 verschraubt werden. Die Schlitze bzw. Aussparungen 174 in den Korpuswänden 172 erstrecken sich bis an die Oberkante der Rahmenverlängerung, so dass der Leitungsauslass 100 einfach von oben eingesetzt werden kann. Von der Außenseite der Rahmenverlängerung 170 kann der Leitungsauslass 100 bspw. mittels Schrauben fixiert werden, deren Köpfe an der Außenseite der Korpuswand 172 anliegen (nicht in der Figur gezeigt). Dazu kann in den Führungselementen 114 ein Gewinde vorgesehen sein. Alternativ dazu können die Schrauben von innen gekontert werden. Wie bei der zuvor beschriebenen Ausführung der Rahmenverlängerung kann die Außenseite der Korpuswand 172 strukturiert sein, bspw. mit waagerechten Rillen (nicht in der Figur gezeigt). Entsprechend kann zwischen Schraubenkopf und Außenseite der Korpuswand 170 ein mit einer entsprechenden Struktur versehenes Teil mit einer Bohrung angeordnet sein, durch welche die Schraube hindurchgeführt ist. Bei angezogener Schraube können die Strukturen formschlüssig ineinandergreifen und so bereits bei nicht sehr fest angezogener Schraube eine Verschiebung des Leitungsauslasses 100 in der Rahmenverlängerung 170 verhindern.

Wenn in der vorstehenden Beschreibung auf eine räumliche Orientierung wie bspw. oben, unten oder auf eine Ober- oder Unterseite Bezug genommen wird ist diese, wenn sie nicht aus dem Kontext anders zu verstehen ist, in Bezug auf die Orientierung des Leitungsauslasses 100 wie in den Figuren dargestellt zu verstehen.

**Bezugszeichenliste**

| | | | |
|---|---|---|---|
| 10 | Unterflurkassette | 140 | drittes Führungselement |
| 20 | Kassettendeckel | 144 | Auflagefläche |
| 100 | Leitungsauslass | 146 | Anschlag |
| 102 | Rahmen | 150 | Vertiefung/Aussparung |
| 104 | Rahmenrückwand | 152 | Abdeckung |
| 104a | Rahmenseite | 154 | Achsstummel |
| 104b | Rahmenseite | 156 | Lagerstruktur |
| 106 | Kontur | 158 | Schraube |
| 106a | erster Abschnitt | 160 | Schwenkachse |
| 106b | zweiter Abschnitt | 161 | Schraube |
| 106c | dritter Abschnitt | 170 | Rahmenverlängerung |
| 108 | Anschlag | 172 | Korpuswand |
| 110 | Oberkante | 174 | Schlitze/Aussparungen |
| 111 | Stützfläche | 176 | erstes Ende |
| 112 | zweite Rastkontur | 178 | Befestigungslaschen |
| 114 | Führungselement | 180 | Schraube |
| 116 | Fixiermittel | 182 | Unterlegscheibe |
| 130 | Deckel | 184 | Schraube |
| 130-1 | Blechteil | 200 | Dichtelement |
| 131 | Griff | 300 | Vorsprung |
| 132a | Deckelseite | 302 | Lasche |
| 132b | Deckelseite | 304 | erste Struktur |
| 133 | Klebeschicht | 306 | zweite Struktur |
| 136 | erstes Führungselement | 400 | Fläche |
| 136a | erste Rastkontur | 402 | Öffnung |
| 138 | zweites Führungselement | | |

## Patentansprüche

1. Leitungsauslass (100) für einen Unterflurkanal bzw. eine damit verbundene Unterflurkassette (10) oder Versorgungseinheit, umfassend einen Rahmen (102) und einen in dem Rahmen (102) beweglich gelagerten Deckel (130), **dadurch gekennzeichnet, dass** der Deckel (130) an zwei gegenüberliegenden Seiten (132a, 132b) Führungselemente (136, 138, 140) aufweist, welche in entsprechenden Konturen (106) einer Kulissenführung zweier gegenüberliegender Seiten (104a, 104b) des Rahmens (102) so geführt sind, dass eine im Wesentlichen parallel zur Oberfläche (134) des Deckels (130) verlaufende, durch zwei erste, sich an gegenüberliegenden Seiten des Deckels gegenüberliegende der Führungselemente (136) gebildete Schwenkachse (160) des Deckels (130) entlang der gegenüberliegenden Seiten (104a, 104b) des Rahmens (102) zwischen einer ersten, geschlossenen und einer zweiten, offenen Stellung des Deckels (130) verschiebbar ist.

2. Leitungsauslass (100) nach Anspruch 1, wobei ein erster Abschnitt (106a) der Kontur (106) der Kulissenführung so gestaltet ist, dass eine Verschiebung der Schwenkachse (160) aus der ersten, geschlossenen Stellung des Deckels (130) heraus in die zweite, offene Stellung des Deckels (130) eine im Wesentlichen senkrecht zu einer Oberkante (110) des Rahmens (102) verlaufende Komponente aufweist.

3. Leitungsauslass (100) nach Anspruch 1 oder 2, wobei ein zweiter Abschnitt (106b) der Kontur (106) der Kulissenführung so gestaltet ist, dass die Verschiebung der Schwenkachse (160) aus der ersten, geschlossenen Stellung des Deckels (130) heraus in die zweite, offene Stellung des Deckels (130) eine parallel zu der Oberkante (110) des Rahmens (102) und eine senkrecht zu der Oberkante (110) des Rahmens (102) verlaufende Komponente aufweist.

4. Leitungsauslass (100) nach einem der vorhergehenden Ansprüche, wobei die Kontur (106) der Kulissenführung einen Anschlag (108) aufweist, welcher in einer ersten Zwischenposition des Deckels (130) eine translatorische Bewegung der ersten Führungselemente (136) in einer Richtung senkrecht zur Oberfläche (134) des Deckels (130) begrenzt.

5. Leitungsauslass (100) nach einem der vorhergehenden Ansprüche, wobei zweite Führungselemente (138) vorgesehen sind, welche von den ersten Führungselementen (136) beabstandet an den Seiten (132a, 132b) des Deckels (130) angeordnet sind, und welche zumindest während eines Teils der Bewegung des Deckels (130) von der ersten, geschlossenen Stellung in die zweite, offene Stellung in entsprechenden Abschnitten () der Konturen (106) der Kulissenführung geführt sind.

6. Leitungsauslass (100) nach Anspruch 5, wobei die zweiten Führungselemente (138) in einer Kontur (106) der Kulissenführung so geführt sind, dass eine Drehbewegung des Deckels (130) um die Schwenkachse (160) in der ersten Zwischenposition begrenzt ist.

7. Leitungsauslass (100) nach einem der vorhergehenden Ansprüche, wobei an dem Deckel (130) Abstützelemente mit einer Auflagefläche (144) vorgesehen sind, wobei die Auflageflächen (144) in der ersten Zwischenposition des Deckels durch eine Verschiebung parallel zu einer seitlichen Oberkante (110) des Rahmens (102) auf eine Stützfläche (111) des Rahmens (102) aufschiebbar sind.

8. Leitungsauslass (100) nach Anspruch 7, wobei die Auflagefläche (144) jedes der Abstützelemente von einem Anschlag (146) begrenzt ist, welcher ein weiteres Aufschieben der Auflagefläche (144) auf den Rahmen (102) verhindert, eine Schwenkbewegung des Deckels (130) jedoch zulässt.

9. Leitungsauslass (100) nach einem der vorhergehenden Ansprüche, wobei an den Seiten (132a, 132b) des Deckels (130) Rastkonturen (136a) vorgesehen sind, welche in der zweiten, offenen Stellung des Deckels (130) jeweils so zu einer entsprechend geformten Rastkontur (112) des Rahmens (102) positioniert sind, dass eine Verschiebung der Abstützelemente parallel zu einer seitlichen Oberkante (110) des Rahmens (102) und/oder der ersten Führungselemente (136) des Deckels (130) senkrecht zu der seitlichen Oberkante (110) des Rahmens (102) bei auf dem Rahmen (102) aufliegender Auflagefläche (144) der Abstützelemente verhindert ist.

10. Leitungsauslass (100) nach einem der vorhergehenden Ansprüche, wobei der Deckel (130) eine Vertiefung oder Aussparung (150) aufweist, welche durch eine in der Vertiefung oder Aussparung (150) schwenkbar gelagerte Abdeckung (152) verschließbar ist.

11. Leitungsauslass (100) nach Anspruch 10, wobei die Schwenkachse der Abdeckung (152) von deren parallel dazu verlaufenden Seiten entfernt angeordnet ist, so dass die Abdeckung (152) durch eine auf eine Seite wirkende Kraft aufschwenkt und damit greifbar ist.

12. Leitungsauslass (100) nach Anspruch 10, wobei die Schwenkachse der Abdeckung (152) an einer der parallel dazu verlaufenden Seiten der Abdeckung (152) angeordnet und die Abdeckung (152) in die Vertiefung hineinschwenkbar ist, und wobei die Vertiefung sich unter die an der der Schwenkachse gegenüberliegende Seite der Deckeloberfläche erstreckt, so dass ein Hinterschnitt entsteht.

13. Leitungsauslass (100) nach einem der vorhergehenden Ansprüche 10 bis 12, wobei eine von der Abdeckung (152) betätigte Verriegelungsvorrichtung vorgesehen ist, welche eine Bewegung des Deckels (130) des Leitungsauslasses (100) freigibt.

14. Leitungsauslass (100) nach einem der vorhergehenden Ansprüche, wobei sind der Deckel und/oder der Rahmen mittels eines Druck- oder Spritzgussverfahrens hergestellt ist bzw. sind.

15. Leitungsauslass (100) nach einem der vorhergehenden Ansprüche, wobei die Deckeloberfläche (134), die Oberfläche der Abdeckung (152) und/oder zumindest sichtbare Teile des Rahmens (102) durch eine mechanische, chemische oder elektrochemische Behandlung eine von der nach der Herstellung vorliegende Oberfläche abweichende Optik aufweisen.

16. Leitungsauslass (100) nach einem der vorhergehenden Ansprüche, wobei außen an den Rahmenseiten (104a, 104b) und/oder der Rahmenrückwand (104) Vorsprünge (300) vorgesehen sind welche, wenn der Rahmen (102) auf der Oberseite des Kassettendeckels (20) positioniert ist, auf dieser Oberseite aufliegen und eine Bewegung des Rahmens (102) in Richtung der Oberseite des Kassettendeckels (20) blockieren.

17. Leitungsauslass (100) nach einem der vorhergehenden Ansprüche, wobei von der Unterkante der Rahmenrückwand (104) ein oder mehrere Laschen (302) abstehen, welche auf einer in Richtung der Oberseite des Deckels (130) zeigenden Oberfläche eine oder mehrere Strukturen (304) aufweisen die, wenn der Rahmen (102) auf der Oberseite des Kassettendeckels (20) in einer Endlage positioniert ist, in entsprechende, von der Unterseite des Kassettendeckels (20) aus zugängliche zweite Strukturen (306) eingreifen, und eine Bewegung des Rahmens (102) parallel zu der Oberfläche des Kassettendeckels (20) verhindern und/oder in welche, wenn der Rahmen (102) auf der Oberseite des Kassettendeckels (20) in einer Endlage positioniert ist, von der Oberseite des Kassettendeckels (20) durch die zweiten Strukturen (306) hindurch Befestigungsmittel in die ersten Strukturen (304) eingeführt werden können, um den Rahmen an dem Kassettendeckel (20) zu fixieren.

18. Leitungsauslass (100) nach einem der vorhergehenden Ansprüche, wobei der Rahmen (102) an seiner Außenseite Führungselemente (114) aufweist, entlang welcher eine Rahmenverlängerung (170) senkrecht zu der Oberseite (134) des Deckels (130) des Leitungsauslasses (100) verschiebbar führbar ist

19. Leitungsauslass (100) nach Anspruch 18, wobei an dem Rahmen (102) Fixiermittel (116) zur Fixierung der Rahmenverlängerung (170) vorgesehen sind.

20. Rahmenverlängerung (170) eines Leitungsauslasses (100) nach Anspruch 18 oder 19, mit einer den Rahmen (102) nicht vollständig umschließenden Korpuswand (172), welche den Rahmen (102), dessen Kontur folgend, umfasst, wobei in der Korpuswand (172) Schlitze oder Aussparungen (174) vorgesehen sind, in welchen die an der Außenseite des Rahmens (102) angeordneten Führungselement (114) aufnehmbar und führbar sind, und wobei von einem ersten Ende (176) der Korpuswand (172) zwei oder mehr Befestigungslaschen (178) nach außen auskragen.

21. Rahmenverlängerung (100) nach Anspruch 18, wobei sich die Schlitze oder Aussparungen (174) bis an die Oberkante der ersten Wand erstrecken.
